# EUROPÄISCHE PATENTSCHRIFT

(11) **EP 3 582 953 B1**
(45) Veröffentlichungstag und Bekanntmachung des Hinweises auf die Patenterteilung: **04.05.2022**
(21) Anmeldenummer: 18714767.3
(22) Anmeldetag: 29.03.2018
(51) Int. Cl.: B29C 64/371, B29C 64/153, B22F 3/105, B33Y 10/00, B33Y 50/02, B29C 64/393

(54) **VORRICHTUNG UND VERFAHREN ZUM GENERATIVEN HERSTELLEN EINES DREIDIMENSIONALEN OBJEKTS**
DEVICE AND METHOD FOR THE GENERATIVE PRODUCTION OF A THREE-DIMENSIONAL OBJECT
DISPOSITIF ET PROCÉDÉ DE FABRICATION GÉNÉRATIVE D'UN OBJET TRIDIMENSIONNEL

(30) Priorität: 21.04.2017 DE 102017206792
(43) Veröffentlichungstag der Anmeldung: 25.12.2019
(73) Patentinhaber: EOS GmbH Electro Optical Systems, 82152 Krailling (DE)
(72) Erfinder: SCHADE, Martin, 80809 München (DE); LEUTERER, Martin, 82140 Olching (DE); DOMRÖSE, Robert Achim, 82110 Germering (DE); KUCHENBAUR, Markus, 81369 München (DE); GÖTH, Michael, 81677 München (DE); MITTERMÜLLER, Maximilian, 80687 München (DE)
(74) Vertreter: Prüfer & Partner mbB Patentanwälte · Rechtsanwälte
(86) Internationale Anmeldenummer: PCT/EP2018/058228
(87) Internationale Veröffentlichungsnummer: WO 2018/192763

(56) Entgegenhaltungen:
- EP-A1- 2 786 858
- EP-A1- 3 050 666
- WO-A2-2014/125258
- DE-A1-102013 205 724
- DE-A1-102014 212 100

## Beschreibung

Die vorliegende Erfindung bezieht sich auf eine Vorrichtung und ein Verfahren zum generativen Herstellen eines dreidimensionalen Objekts durch schichtweises Aufbringen und selektives Verfestigen eines Aufbaumaterials, vorzugsweise eines Pulvers.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt.

Beim Bestrahlen mit dem Laserstrahl entstehen je nach Art des verwendeten Materials, insbesondere beim Sintern oder Schmelzen von Metallen, Spratzer, Rauch und Dämpfe, die sich in den Bauraum hinein ausbreiten. Um diese aus dem Bauraum zu entfernen, kann eine Gasströmung durch den Bauraum geleitet werden.

DE 10 2013 205 724 A1 beschreibt eine Vorrichtung und ein Verfahren zum Lasersintern oder -schmelzen, bei dem während des Scannens einer aufgebrachten Pulverschicht mit einem Laserstrahl ein Gasstrom in einer Hauptströmungsrichtung über die aufgetragene Schicht geleitet wird. Um zu verhindern, dass die Verunreinigungen in den optischen Pfad des Laserstrahls gelangen und durch eine Störung des Laserstrahls zu einer Beeinträchtigung der Qualität des hergestellten Objekts führen, werden die Hauptströmungsrichtung des Gasstroms und die Abtastrichtung des Laserstrahls aufeinander abgestimmt. Das bedeutet, dass die Abtastrichtung des Laserstrahls abhängig von der Hauptströmungsrichtung des Gasstroms oder umgekehrt so gewählt wird, dass der Winkel zwischen den beiden Richtungen eine vorbestimmte Winkelbeziehung erfüllt.

EP 3 050 666 A1 offenbart ein Verfahren zum selektiven Laserschmelzen, bei dem ein Schutzgas über die zur verfestigende Pulverschicht geleitet wird. In einer Ausführungsform wird die Strömungsrichtung des Schutzgases während des Verfestigens einer Schicht verändert.

DE 10 2014 212 100 A1 betrifft eine Vorrichtung und ein Verfahren zur generativen Herstellung von Bauteilen durch schichtweises Verbinden von Pulverpartikeln untereinander durch selektive Wechselwirkung der Pulverpartikel mit einem hochenergetischen Strahl, wobei während der Verbindung der Pulverpartikel in einer Schicht aus Pulverpartikeln ein Gasfluss mit einer Strömungsrichtung mit einem zumindest teilweise parallel zur Schicht der Pulverpartikel ausgerichteten Richtungsanteil über die Schicht der Pulverpartikel bereitgestellt wird. Der zumindest teilweise parallel zur Schicht der Pulverpartikel ausgerichtete Richtungsanteil des Gasflusses wird während der Verbindung der Pulverpartikel in einer Schicht in mindestens zwei Richtungen erzeugt, die einander entgegengesetzte Richtungsanteile aufweisen.

Die Aufgabe der vorliegenden Erfindung besteht darin, ein alternatives bzw. verbessertes Verfahren bzw. eine alternative bzw. verbesserte Vorrichtung zum generativen Herstellen eines dreidimensionalen Objekts durch schichtweises Aufbringen und selektives Verfestigen eines Aufbaumaterials bereitzustellen, bei denen ein Gasstrom über eine aufgebrachte Schicht des Aufbaumaterials geleitet wird, insbesondere wenn dabei das Gas in voneinander verschiedenen Strömungsrichtungen über die Schicht strömt.

Diese Aufgabe wird gelöst durch ein Steuerverfahren gemäß Anspruch 1, ein Herstellverfahren gemäß Anspruch 12, ein Computerprogramm gemäß Anspruch 13, eine Steuerungseinrichtung gemäß Anspruch 14 und eine Herstellvorrichtung gemäß Anspruch 15. Weiterbildungen der Erfindung sind jeweils in den Unteransprüchen angegeben. Dabei können die Verfahren auch durch die untenstehenden bzw. in den Unteransprüchen ausgeführten Merkmale der Vorrichtungen weitergebildet sein oder umgekehrt. Die Merkmale der Vorrichtungen und Verfahren können auch jeweils untereinander zur Weiterbildung genutzt werden.

Das erfindungsgemäße Steuerverfahren dient zum Ansteuern wenigstens einer Verfestigungsvorrichtung einer generativen Herstellvorrichtung zur Herstellung eines dreidimensionalen Objekts mittels eines generativen Schichtbauverfahrens, bei dem wenigstens ein Objekt schichtweise durch wiederholtes Aufbringen einer Schicht eines Aufbaumaterials, vorzugsweise eines Pulvers, auf ein Baufeld und durch selektives Verfestigen der aufgebrachten Schicht an Stellen, die einem Querschnitt des herzustellenden Objekts entsprechen, hergestellt wird, und bei dem ein Gas mit mehreren Strömungsrichtungen, die im Wesentlichen nicht gleichgerichtet sind, über das Baufeld strömt. Das Verfahren enthält für zumindest eine zu verfestigende Schicht die Schritte: Entgegennehmen und/oder Ermitteln einer Verteilung der Strömungsrichtungen des Gases oberhalb des Baufelds, Zuweisen einer Referenzströmungsrichtung zu einem Bereich des Baufelds in Abhängigkeit von der Verteilung der Strömungsrichtungen oberhalb des Bereichs, Ansteuern der Verfestigungsvorrichtung zum Verfestigen zumindest eines Teils des Querschnitts des herzustellenden Objekts in Abhängigkeit von einer Referenzströmungsrichtung oberhalb des Bereichs des Baufelds, in dem der jeweilige Teil des Querschnitts positioniert ist. Ein solches Steuerverfahren ermöglicht es beispielsweise, den Verfestigungsvorgang so zu steuern, dass das Verfestigen nicht durch während des Verfestigens entstehende Verunreinigungen wie beispielsweise Spratzer, Rauch und/oder Dämpfe beeinträchtigt wird. Damit kann beispielsweise eine höhere Fertigungspräzision und eine homogenere Qualität von Objekten bzw. Bauteilen erreicht werden, unter Umständen auch eine Verbesserung ihrer strukturellen und mechanischen Eigenschaften. Besondere Vorteile erbringt das Verfahren bei komplexen Strömungsführungen über das Baufeld mit deutlich voneinander abweichenden Strömungsrichtungen, zum Beispiel bei separat voneinander über das Baufeld verlaufenden Strömungen oder bei einander überlagernden, divergierenden oder konvergierenden Teilströmungen einer Gesamtströmung.

Strömungen, die über eine bestimmte Strecke ungeführt verlaufen, sind hinsichtlich ihrer Richtung häufig nicht vollständig kontrollierbar. In der Prozesskammer einer generativen Herstellvorrichtung können Gasströmungen zumindest zeitweise abgelenkt werden, beispielsweise durch verfahrende Elemente wie einen Beschichter oder durch Temperaturunterschiede. Dies kann beispielsweise zu einem Wabern bzw. instationären Verhalten der Gasströmung während der Herstellung eines dreidimensionalen Objekts führen. Dieser Umstand kann mittels eines Toleranzbereichs berücksichtigt werden: Eine Gasströmung, die nominell eine einzige Strömungsrichtung aufweist (was auch den Fall mehrerer parallel zueinander verlaufender Gasteilströmungen umfasst), kann in der Praxis gegebenenfalls lokale Abweichungen von beispielsweise 10° relativ zur nominellen Strömungsrichtung annehmen, ohne den Herstellungsprozess signifikant zu beeinträchtigen.

Im Unterschied dazu werden "im Wesentlichen nicht gleichgerichtete" Strömungsrichtungen so verstanden, dass Teilströmungen gezielt unterschiedliche Strömungsrichtungen haben. Dieser Effekt kann durch eine geeignete konstruktive Ausprägung und/oder Ansteuerung von Elementen einer Gaszuführung und/oder Gasabführung in die bzw. aus der Prozesskammer erreicht werden. Vorzugsweise beträgt ein Winkel zwischen konstruktiv vorgesehenen Strömungsrichtungen von Gasteilströmungen mindestens 20°, besonders bevorzugt mindestens 40°.

"Entgegennehmen einer Verteilung der Strömungsrichtungen des Gases oberhalb des Baufelds" bedeutet das Übernehmen aus einer Vorrichtung, in welcher die Strömungsverteilung gespeichert ist und/oder berechnet wird, beispielsweise durch Simulation des Strömungsverlaufs. Die Vorrichtung kann grundsätzlich Teil einer generativen Herstellvorrichtung und/oder einer Steuereinrichtung für eine derartige Herstellvorrichtung sein oder eine selbständige, separate Einheit sein. Das Entgegennehmen kann als Übertragung von Daten der Strömungsrichtungen in einem geeigneten Datenformat bzw. durch eine geeignete Schnittstelle oder per Bedienereingabe, z. B. an einer Eingabeschnittstelle, erfolgen. Die Speicherung oder Simulation kann mit mehreren Feinheitsgraden erfolgen, d. h. mit unterschiedlichen örtlichen Auflösungen über die zweidimensionale Erstreckung des Baufelds bzw. über den dreidimensionalen Raum oberhalb des Baufelds.

"Ermitteln" ist hier zu verstehen als eine messtechnische Erfassung der Strömungsverteilung, beispielsweise mittels Sensoren. Der Feinheitsgrad der Messung kann dabei über eine Anzahl der verwendeten Sensoren und damit über deren jeweiligen Abstand zueinander bzw. über eine Dichte ihrer Verteilung über die Fläche des Baufelds bestimmt sein. Die Sensoren werden vorzugsweise in der Arbeitsebene oder einer Ebene, die in einer vorbestimmten Höhe parallel zur Arbeitsebene über ihr verläuft, angeordnet.

Eine "Verteilung der Strömungsrichtungen des Gases" bedeutet in diesem Kontext eine Repräsentation bzw. Interpretation bzw. gefilterte Darstellung tatsächlicher Strömungsrichtungen eines Gasstroms in einem untersuchten Bereich der Prozesskammer. Die Verteilung kann regelmäßig oder unregelmäßig sein, eine Dichte der Verteilung kann unterschiedlich sein, z. B. lokal selektiv variieren. Die Strömungsrichtungen können dreidimensional oder zweidimensional definiert sein. Beispielsweise kann es im Rahmen eines bestimmten Erkenntnisinteresses ausreichen, lediglich die Horizontalkomponenten von Strömungsrichtungen bzw. Strömungsvektoren, d. h. Richtungen in einer Ebene parallel zum Baufeld, zu ermitteln. Alternativ können Strömungsrichtungen auch durch Horizontal- und Vertikalkomponenten (bei einem horizontal orientierten Baufeld) definiert sein. Die Verteilung der Strömungsrichtungen kann dabei statisch oder dynamisch sein. Das erfindungsgemäße Verfahren kann entsprechend einmalig oder mehrmalig durchgeführt werden und z. B. einer Kalibrierung von Komponenten einer generativen Herstellvorrichtung dienen.

Die Formulierung "oberhalb des Baufelds" ist hier so zu verstehen, dass eine Stelle, an der eine Strömungsrichtung festgestellt wird, innerhalb des Baufelds liegt, wenn sie in einer Orthogonalprojektion auf die Ebene des Baufelds projiziert wird. Typischerweise weist die Stelle einen maximalen Abstand zum Baufeld auf, der durch eine lichte Höhe der Prozesskammer definiert ist. Hinsichtlich einer Funktion des Gasstroms, Rauch zu verdrängen und aus einem Bereich der Prozesskammer oberhalb des Baufelds abzuführen, können die Strömungsrichtungen in einer oder mehreren Höhen über dem Baufeld ermittelt werden, z. B. in mehreren Ebenen parallel zum Baufeld oder in einer dreidimensionalen Matrix. Hinsichtlich einer Einwirkung des Gasstroms auf eine aufgetragene Pulverschicht als Beispiel für eine Methode eines generativen Schichtbauverfahrens kann es vorteilhaft sein, die Strömungsrichtungen in einer geringen Höhe oberhalb des Baufelds von beispielsweise 1 oder 5 cm zu ermitteln. So kann eine gegebenenfalls ungünstige Beeinflussung einer aufgetragenen Schicht besser detektiert werden.

Die einem Bereich zugewiesene "Referenzströmungsrichtung" kann einer einzigen Strömungsrichtung entsprechen, beispielsweise falls eine vorliegende Verteilung der Strömungsrichtungen relativ grob ist oder oberhalb des betreffenden Bereichs tatsächlich ein uniformes Strömungsprofil vorliegt. Vorzugsweise wird die Verteilung der Strömungsrichtungen in einer Auflösung bereitgestellt, die es erlaubt, dass eine Referenzströmungsrichtung jeweils mindestens zwei Strömungsrichtungen der Verteilung umfasst. Ein Zuweisen von Referenzströmungsrichtungen erfolgt vorzugsweise so, dass die jeweils umfassten Strömungsrichtungen in relativ geringem Maße voneinander abweichen. Beispielsweise kann die Referenzströmungsrichtung ein Mittelwert der von ihr umfassten Strömungsrichtungen sein, wobei die Strömungsrichtungen gleich oder unterschiedlich gewichtet werden können.

Die Formulierung "Zuweisen einer Referenzströmungsrichtung ... in Abhängigkeit" umfasst den Fall, dass die einem Bereich zuzuweisende Referenzströmungsrichtung auf einen Nullwert gesetzt wird. Dies kann beispielsweise dadurch begründet sein, dass aufgrund sehr unterschiedlicher, gegebenenfalls gegensätzlicher Strömungsrichtungen oberhalb des Bereichs ein Zuweisen einer einzigen Referenzströmungsrichtung zu dem Bereich nicht sinnvoll erscheint, da sie ein zu breites Spektrum an Strömungsrichtungen repräsentieren würde. Typischerweise wird die Referenzströmungsrichtung durch einen bestimmten Winkel relativ zum Baufeld definiert, der sich auf eine Orientierung in der Fläche oder im Raum beziehen kann.

Die Formulierung "Ansteuern der Verfestigungsvorrichtung ... in Abhängigkeit" umfasst den Fall, dass die Verfestigungsvorrichtung derart angesteuert wird, dass sie nicht verfestigt. Bei einem Ansteuern werden typischerweise bestimmte Parameterwerte der Verfestigungsvorrichtung eingestellt. Wenn in einem bestimmten Bereich des Baufelds nicht verfestigt werden soll, kann einer dieser Parameter beispielsweise auf einen Nullwert gesetzt werden, sodass der Bereich von der Verfestigung ausgespart wird.

Vorzugsweise enthält das Steuerverfahren ferner die Schritte Zerlegen zumindest eines Abschnitts des Baufelds in mehrere Teilbereiche und für mehr als einen Teilbereich des Baufelds das Zuweisen je einer Referenzströmungsrichtung zu dem Teilbereich. Vorzugsweise sind die Teilbereiche aneinander angrenzend und/oder einander überlappend gewählt und/oder erfolgt das Zerlegen in Teilbereiche in Abhängigkeit von einer Geometrie des herzustellenden Objekts in der jeweiligen Schicht und/oder erfolgt das Zerlegen in Teilbereiche in Abhängigkeit von einer Verteilung der Strömungsrichtungen oberhalb des Baufelds. Dadurch kann beispielsweise das erfindungsgemäße Steuerverfahren bei starker Divergenz der Strömungsrichtungen auf lokal begrenzte Bereiche angewendet werden.

Vorzugsweise wird bei dem Steuerverfahren weiterhin die Verfestigungsvorrichtung zum Verfestigen zumindest eines Teils des Querschnitts des herzustellenden Objekts, der sich über mehr als einen der Teilbereiche erstreckt, in Abhängigkeit von der jeweiligen Referenzströmungsrichtung oberhalb des jeweiligen Teilbereichs angesteuert. Dadurch kann beispielsweise das Verfestigen des herzustellenden Objekts an unterschiedliche über den Teilbereichen herrschende Strömungsrichtungen angepasst werden.

Vorzugsweise erfolgt das Zerlegen in Teilbereiche in Abhängigkeit von einem Divergenzwinkel der Strömungsrichtungen, wobei besonders bevorzugt eine Fläche eines Teilbereichs umso größer gewählt wird, je kleiner der Divergenzwinkel ist und umso kleiner, je größer der Divergenzwinkel ist. Dadurch kann beispielsweise die Divergenz der Strömungsrichtungen pro Teilbereich begrenzt werden. Grundsätzlich kann der Divergenzwinkel der Strömungsrichtungen in allen Raumrichtungen als Grundlage für das Zerlegen dienen. Vorzugsweise wird der Divergenzwinkel von Strömungsrichtungen verwendet, die in einer Ebene im Wesentlichen parallel zum Baufeld liegen, d.h. eine eventuell vorhandene Vertikalkomponente der Strömungsrichtungen wird für die Zerlegung nicht berücksichtigt. Diese Ausgestaltung der Erfindung ist besonders vorteilhaft bei einem Strömungsverlauf im Wesentlichen parallel zum Baufeld, wie er häufig in generativen Schichtbauvorrichtungen umgesetzt ist.

Vorzugsweise ist die Referenzströmungsrichtung eine mittlere Strömungsrichtung einer Anzahl von Strömungsrichtungen und das Zerlegen in Teilbereiche erfolgt so, dass eine Abweichung einer Strömungsrichtung oberhalb eines Teilbereichs von der Referenzströmungsrichtung oberhalb des Teilbereichs einen vorbestimmten Winkel nicht überschreitet. Dadurch kann beispielsweise auf einfache Weise eine Referenzströmungsrichtung für den Teilbereich bestimmt werden. Je nach Wahl bzw. Einstellung des Winkels kann eine Beeinflussung von Eigenschaften des Fertigungsprodukts bzw. Objekts durch Verunreinigungen reduziert werden.

Vorzugsweise erfolgt das Zerlegen in Teilbereiche innerhalb einer Schicht lokal selektiv, besonders bevorzugt, indem eine Abweichung der Strömungsrichtungen oberhalb der Teilbereiche von der jeweiligen Referenzströmungsrichtung oberhalb der Teilbereiche durch unterschiedliche vorbestimmte Winkel begrenzt wird. Dadurch kann beispielsweise das Zerlegen in Teilbereiche flexibel an die lokal herrschenden Strömungsverhältnisse angepasst werden. Die Winkel, welche die Abweichung begrenzen, können in Abhängigkeit von Qualitätskriterien für das herzustellende Objekt oder Bereiche des Objekts bestimmt werden, beispielsweise um so geringer gewählt werden, je höher die Anforderung an eine Homogenität des Objekts oder Objektbereichs ist.

Vorzugsweise beträgt der vorbestimmte Winkel mindestens 0°, weiter bevorzugt mindestens 1°, besonders bevorzugt mindestens 5° und/oder höchstens 60°, weiter bevorzugt höchstens 30°, besonders bevorzugt höchstens 20°, Dadurch kann beispielsweise erreicht werden, dass eine Abweichung einer Strömungsrichtung von der Referenzströmungsrichtung in einem vorbestimmten Bereich liegt.

Vorzugsweise erfolgt das Zerlegen in Teilbereiche schichtspezifisch in Abhängigkeit von einer Geometrie eines jeweils zu verfestigenden Querschnitts des herzustellenden Objekts und/oder von einem Verhältnis von Flächeninhalten eines zu verfestigenden Bereichs und eines nicht zu verfestigenden Bereichs des Baufelds und/oder von einem Grad der Fragmentierung des zu verfestigenden Bereichs innerhalb einer jeweiligen Schicht. Dadurch kann beispielsweise das Zerlegen in Teilbereiche bauteilabhängig durchgeführt werden.

Vorzugsweise erfolgt das Zuweisen einer Referenzströmungsrichtung zu einem Bereich oder Teilbereich in Abhängigkeit von einer Verteilung der Strömungsrichtungen in einem Strömungssegment, das oberhalb des Bereichs oder Teilbereichs liegt, wobei besonders bevorzugt das Strömungssegment ein zweidimensionales Flächensegment mit einem vorbestimmten Abstand zu dem Baufeld und/oder ein dreidimensionales Raumsegment mit einem vorbestimmten Abstand zu dem Baufeld und einer vorbestimmten Höhe ist. Dadurch kann beispielsweise eine direkte Zuordnung der Referenzströmungsrichtung eines Bereichs respektive Verfestigungssegments des Baufelds zu einer zwei- oder dreidimensionalen Strömungsverteilung in dem zugeordneten Strömungssegment verwirklicht werden. Beispielsweise können Strömungssegmente und Verfestigungssegmente graphisch dargestellt und überlagert werden, um eventuell kritische Zonen der Verfestigung einer Schicht bzw. eines Objektquerschnitts sichtbar zu machen.

Vorzugsweise repräsentiert eine Referenzströmungsrichtung ausschließlich Strömungsrichtungen aus der entgegengenommenen oder ermittelten Verteilung, die in einem definierten Winkelspektrum liegen und/oder Strömungsrichtungen, die mit einer jeweiligen Gasteilströmung korrelieren, deren Volumenstromwert oberhalb eines vordefinierten Schwellenwerts liegt. Dadurch kann beispielsweise eine Beeinflussung der Referenzströmungsrichtung durch kleinere Störungen wie z. B. lokale Verwirbelungen verhindert werden. Dies basiert auf der Erkenntnis, dass Verwirbelungen mit einem geringen Volumenstrom in vergleichsweise geringem Maß rauchförmige Prozessemissionen wie z. B. Schmauch bewegen können und damit für eine Festlegung einer Verfestigungsrichtung in einem unterhalb der jeweiligen Verwirbelung liegenden Bereich des Baufelds gegebenenfalls vernachlässigt werden können,

Vorzugsweise umfasst der Schritt des Ansteuerns ein Festlegen einer Verfestigungsrichtung für den Bereich und/oder zumindest diejenigen Teilbereiche des Baufelds, in denen der Querschnitt des herzustellenden Objekts positioniert ist, wobei vorzugsweise ein Winkel zwischen einer Verfestigungsrichtung und einer Referenzströmungsrichtung mindestens 22,5°, weiter bevorzugt mindestens 45°, noch weiter bevorzugt mindestens 60°, noch weiter bevorzugt mindestens 90° und/oder höchstens 337,5°, weiter bevorzugt höchstens 315°, noch weiter bevorzugt höchstens 300°, noch weiter bevorzugt höchstens 270° beträgt. Dadurch kann beispielsweise die Verfestigungsrichtung so gewählt werden, dass sie sich hinreichend von einer Ausbreitungsrichtung der während des Verfestigens entstehenden Verunreinigungen unterscheidet.

Vorzugsweise ist die Verfestigungsvorrichtung des erfindungsgemäßen Steuerverfahrens eine Bestrahlungsvorrichtung und die Verfestigungsrichtung eine Richtung des Bewegens einer Auftreffstelle eines Verfestigungsstrahls, besonders bevorzugt eines Laserstrahls, über das Baufeld.

Gemäß einer weiteren Ausgestaltung der Erfindung wird bei dem Steuerverfahren vorzugsweise die jeweilige Strömungsrichtung gemessen und/oder in einem Computer basierend auf mindestens einem der folgenden Kriterien simuliert:
- eine gegebene Geometrie einer Gaszufuhr- und/oder Gasabfuhreinrichtung zum Zuführen bzw. Abführen von Gas in bzw. aus einer Prozesskammer der generativen Herstellvorrichtung,
- eine gegebene Geometrie eines Innenraums der Prozesskammer,
- eine Projektion einer Geometrie einer Düse der Gaszufuhreinrichtung auf das Baufeld,
- eine Geschwindigkeit und/oder eine Dichte und/oder ein Druck und/oder eine Temperatur des der Prozesskammer zugeführten Gases und/oder eine Veränderung der Geschwindigkeit und/oder der Dichte und/oder des Drucks und/oder der Temperatur des Gases während des Durchströmens der Prozesskammer.

Dadurch kann beispielsweise eine besonders präzise Ermittlung einer Verteilung von Strömungsrichtungen über dem Baufeld erzielt werden.

Vorzugsweise umfasst das Steuerverfahren mindestens die Schritte:
- Detektieren einer Anzahl von Strömungsrichtungen des Gases oberhalb des Baufelds mittels einer vorzugsweise anemometrischen Detektionseinrichtung,
- Abgleichen der detektierten Strömungsrichtungen mit örtlich und/oder zeitlich korrespondierenden in einem Computer simulierten Strömungsrichtungen,
- Ermitteln eines Korrekturfaktors auf Basis des Abgleichs der detektierten und der simulierten Strömungsrichtungen, und
- Durchführen einer Simulation der Verteilung der Strömungsrichtungen des Gases oberhalb des Baufelds unter Berücksichtigung des ermittelten Korrekturfaktors.

Dadurch kann beispielsweise eine fortlaufende Verbesserung einer Simulation einer Verteilung der Strömungsrichtungen über dem Baufeld erreicht werden.

Vorzugsweise wird eine relativ zum Baufeld vertikale Komponente eines Vektors einer Strömungsrichtung des Gasstroms ermittelt und bei dem Zuweisen einer Referenzströmungsrichtung zu einem Bereich oder Teilbereich und/oder bei der Zerlegung in Teilbereiche berücksichtigt, wobei besonders bevorzugt einem Bereich oder Teilbereich keine Referenzströmungsrichtung zugewiesen wird, wenn die Strömungsrichtung(en) oberhalb des Bereichs oder Teilbereichs im Wesentlichen vertikal zum Baufeld ist/sind. Die Berücksichtigung der vertikalen Komponente kann beispielsweise als Korrekturfaktor erfolgen, mit welchem eine horizontale Komponente eines Strömungsvektors multipliziert werden kann und/oder mit welchem eine Gewichtung des Strömungsvektors relativ zu anderen Strömungsvektoren der Strömungsverteilung verändert werden kann. Dadurch können sich beispielsweise Vorteile bei Strömungsprofilen mit einem relativ hohen Anteil schräg und/oder vertikal auf das Baufeld auftreffender Gasteilströmungen ergeben. In diesem Fall könnte eine isolierte Betrachtung horizontaler Komponenten von Strömungsvektoren eine Verzerrung des tatsächlichen Einflusses einer Strömung oder Teilströmung auf einen Herstellungsprozess bewirken. Insofern kann diese Ausgestaltung der Erfindung zu einer verbesserten Qualität des Verfestigungsprozesses führen.

Gemäß einer weiteren Ausgestaltung der Erfindung werden vorzugsweise für eine vorbestimmte Einstellung einer Beströmung der Prozesskammer, weiter bevorzugt für einen vorbestimmten Verlauf eines Gasstroms und/oder einen vorbestimmten Wirkbereich der Beströmung, Daten für ein Zuweisen einer Referenzströmungsrichtung zu einem Bereich oder Teilbereich und/oder für ein Zerlegen in Teilbereiche in einer Datenbank gespeichert, wobei besonders bevorzugt diese Daten für ein aktuelles Zuweisen einer Referenzströmungsrichtung zu einem Bereich oder Teilbereich und/oder für ein Zerlegen eines Abschnitts des Baufelds in Teilbereiche verwendet und/oder abgeändert und verwendet werden. Dadurch kann beispielsweise eine schnelle Anpassung der Verfestigungsvorrichtung an eine Änderung des Beströmungsprofils der Prozesskammer bzw. der Verteilung der Strömungsrichtungen über dem Baufeld erfolgen. Da die Daten für das Zuweisen und/oder für das Zerlegen zu einem beliebigen Zeitpunkt vor einem aktuellen Herstellungsprozess gewonnen bzw. gespeichert werden können, kann außerdem Rechenkapazität während des Herstellungsprozesses eingespart werden.

Das erfindungsgemäße Herstellungsverfahren dient zum generativen Herstellen eines dreidimensionalen Objekts durch schichtweises Aufbringen und selektives Verfestigen eines Aufbaumaterials, vorzugsweise eines Pulvers. Das Herstellungsverfahren enthält die Schritte Aufbringen einer Schicht des Aufbaumaterials auf ein Baufeld, selektives Verfestigen der aufgebrachten Schicht des Aufbaumaterials an Stellen, die einem Querschnitt des herzustellenden Objekts entsprechen, mittels einer Verfestigungsvorrichtung, und Wiederholen der Schritte des Aufbringens und des Verfestigens, bis das dreidimensionale Objekt fertiggestellt ist. Dabei fließt ein Gas mit mehreren Strömungsrichtungen, die im Wesentlichen nicht gleichgerichtet sind, über das Baufeld. Zum Durchführen des Herstellungsverfahrens wird ein erfindungsgemäßes Steuerverfahren verwendet, wobei vorzugsweise das erfindungsgemäße Steuerverfahren lediglich vor einem Beginn des selektiven Verfestigens oder mehrmals während des generativen Herstellens des dreidimensionalen Objekts durchgeführt wird und/oder in Abhängigkeit von einem Einstellen und/oder Ändern der Strömungsrichtungen des Gases durchgeführt wird. Ein solches Herstellungsverfahren ermöglicht es beispielsweise, die Wirkungen des erfindungsgemäßen Steuerverfahrens bei der Herstellung eines dreidimensionalen Objekts zu erzielen.

Das erfindungsgemäße Computerprogramm, das in eine programmierbare Steuereinheit ladbar ist, enthält Programmcodemittel, um alle Schritte eines erfindungsgemäßen Steuerverfahrens und/oder eines erfindungsgemäßen Herstellungsverfahrens auszuführen, wenn das Computerprogramm auf der Steuereinheit ausgeführt wird. Ein solches Computerprogramm ermöglicht es beispielsweise, die Wirkungen des erfindungsgemäßen Steuer- oder Herstellungsverfahrens computergesteuert zu erzielen.

Die erfindungsgemäße Steuerungseinrichtung für eine Herstellvorrichtung zum generativen Herstellen eines dreidimensionalen Objekts durch schichtweises Aufbringen und selektives Verfestigen eines Aufbaumaterials in einem Baufeld, wobei die Herstellvorrichtung enthält:
eine Verfestigungsvorrichtung zum selektiven Verfestigen einer auf ein Baufeld aufgebrachten Schicht des Aufbaumaterials an Stellen, die einem Querschnitt des herzustellenden Objekts entsprechen, und
eine Beströmungsvorrichtung zum Erzeugen eines Gasflusses mit mehreren Strömungsrichtungen, die im Wesentlichen nicht gleichgerichtet sind, über das Baufeld,
wobei die Steuerungseinrichtung ausgebildet ist, die Herstellvorrichtung so zu steuern, dass sie ein erfindungsgemäßes Steuerverfahren durchführt. Eine solche Steuerungseinrichtung ermöglicht es beispielsweise, die Herstellvorrichtung zum generativen Herstellen eines dreidimensionalen Objekts so anzusteuern, dass die Wirkungen des erfindungsgemäßen Steuer- oder Herstellungsverfahrens erzielt werden.

Die erfindungsgemäße Herstellvorrichtung dient zum generativen Herstellen eines dreidimensionalen Objekts durch schichtweises Aufbringen und selektives Verfestigen eines Aufbaumaterials. Die Herstellvorrichtung enthält eine Verfestigungsvorrichtung zum selektiven Verfestigen einer auf ein Baufeld aufgebrachten Schicht des Aufbaumaterials an Stellen, die einem Querschnitt des herzustellenden Objekts entsprechen, und eine Beströmungsvorrichtung zum Erzeugen eines Gasflusses mit mehreren Strömungsrichtungen, die im Wesentlichen nicht gleichgerichtet sind, über das Baufeld. Die Herstellvorrichtung ist ausgebildet und/oder gesteuert, die Schritte des Aufbringens und des selektiven Verfestigens zu wiederholen, bis das Objekt fertiggestellt ist, und umfasst
eine erfindungsgemäße Steuerungseinrichtung. Mit einer solchen Herstellvorrichtung können beispielsweise die Wirkungen des erfindungsgemäßen Steuer- oder Herstellungsverfahrens erzielt werden.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum generativen Herstellen eines dreidimensionalen Objekts gemäß einer ersten Ausführungsform der vorliegenden Erfindung.
- Fig. 2a: bis 2f zeigen als Beispiel verschiedene Draufsichten auf ein Baufeld zur Verdeutlichung verschiedener Alternativen, wie Gas über ein Baufeld der in Fig. 1 gezeigten Vorrichtung strömen kann.
- Fig. 3: zeigt in einer Draufsicht auf das Baufeld ein Beispiel für eine Segmentierung des Baufelds bei einer radialen Strömungsverteilung.
- Fig. 4a: und 4b zeigen in Draufsichten auf das Baufeld zwei Beispiele für eine bauteilabhängige Segmentierung des Baufelds.
- Fig. 5: zeigt eine Draufsicht auf das Baufeld zum Verdeutlichen eines Belichtungsverfahrens gemäß der ersten Ausführungsform.
- Fig. 6a: und 6b zeigen in Draufsichten auf das Baufeld zwei Beispiele für Verläufe der Abtastung eines zu verfestigenden Streifens durch einen Laserstrahl gemäß einer zweiten Ausführungsform der vorliegenden Erfindung.
- Fig. 7: zeigt eine Draufsicht auf das Baufeld zum Verdeutlichen eines Belichtungsverfahrens gemäß der zweiten Ausführungsform.

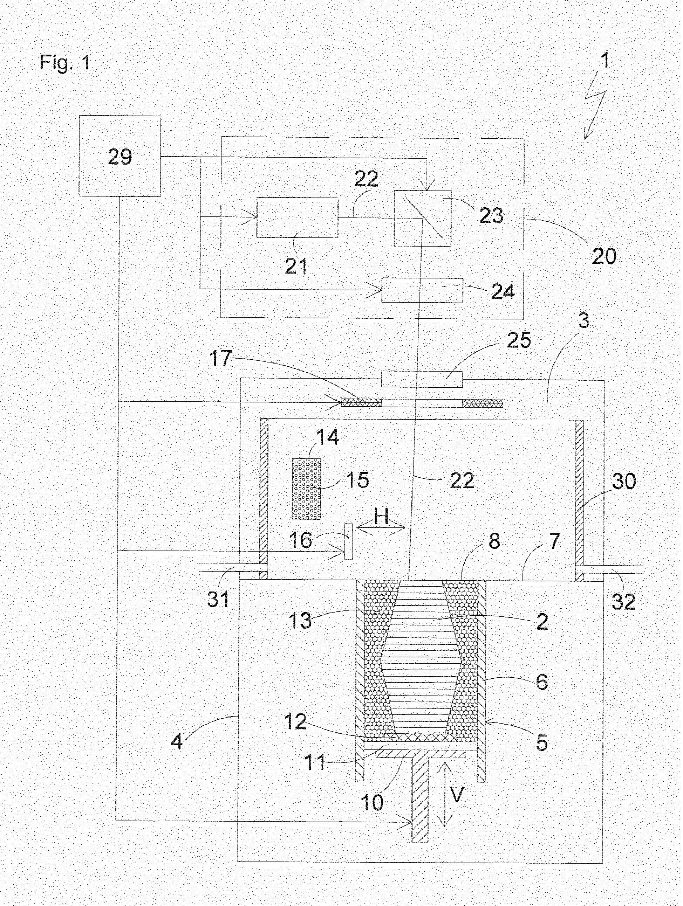

Im Folgenden wird mit Bezug auf Fig. 1 eine erste Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Aufbaumaterial und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Vorzugsweise erstreckt sich der Beschichter 16 quer zu seiner Bewegungsrichtung über den ganzen zu beschichtenden Bereich.

Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird. Die Belichtungsvorrichtung 20 kann alternativ auch dazu ausgebildet sein, gleichzeitig mehrere Laserstrahlen 22 durch ein oder mehrere Einkoppelfenster 25 auf die Arbeitsebene 7 zu lenken, die als Verfestigungsstrahlen wirken.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

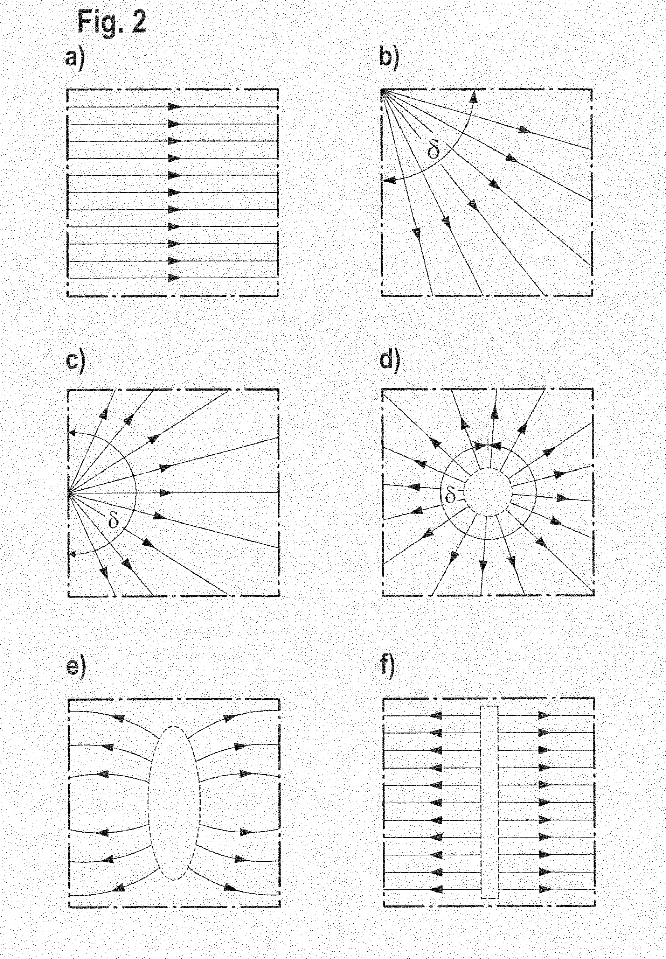

Ferner enthält die Lasersintervorrichtung 1 eine Beströmungsvorrichtung 30 mit einer Gaszufuhr 31 und einer Gasabfuhr 32 zum Erzeugen eines Gasflusses über das Baufeld. Diese Ausführungsform einer Beströmungsvorrichtung 30 kann beispielsweise eine gerichtete Gasströmung mit im Wesentlichen einer einzigen Strömungsrichtung über dem Baufeld 8 erzeugen, die in Fig. 2a schematisch gezeigt ist. Alternativ oder zusätzlich kann die Beströmungsvorrichtung 30 eine Gaszufuhr an der Decke der Prozesskammer 3 aufweisen (nicht gezeigt), die einen Gasstrom in die Prozesskammer 3 bzw. zum Baufeld 8 lenkt, der beispielsweise durch eine Düse geformt werden kann. Eine derartige Ausgestaltungsform kann beispielsweise Strömungsverläufe über dem Baufeld 8 erzeugen, wie sie in Fig. 2d, 2e, 2f gezeigt sind,

Im Betrieb wird zum Aufbringen einer Pulverschicht zunächst der Träger 10 um eine Höhe abgesenkt, die der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8, bringt dort pulverförmiges Aufbaumaterial 15 auf die Bauunterlage oder auf eine bereits vorher vorhandene Pulverschicht auf und zieht es zu einer Pulverschicht aus. Das Aufbringen erfolgt zumindest über den gesamten Querschnitt des herzustellenden Objekts 2, vorzugsweise über das gesamte Baufeld 8, also den durch die Behälterwandung 6 begrenzten Bereich. Optional wird das pulverförmige Aufbaumaterial 15 mittels einer Strahlungsheizung 17 auf eine Arbeitstemperatur aufgeheizt.

Anschließend wird der Querschnitt des herzustellenden Objekts 2 nach einem vordefinierten Muster von dem Laserstrahl 22 abgetastet (gescannt), sodass das pulverförmige Aufbaumaterial 15 an Stellen verfestigt wird, die dem Querschnitt des herzustellenden Objekts 2 entsprechen. Dabei werden die Pulverkörner an diesen Stellen mittels der durch die Strahlung eingebrachten Energie teilweise oder vollständig aufgeschmolzen, so dass sie nach einer Abkühlung miteinander verbunden als Festkörper vorliegen. Während des Scannens der Pulverschicht durch den Laserstrahl wird mittels der Beströmungsvorrichtung 30 ein Gasstrom über das Baufeld 8 geleitet. Diese Schritte werden solange wiederholt, bis das Objekt 2 fertiggestellt ist und der Prozesskammer 3 entnommen werden kann.

Je nach Aufbau und/oder Anordnung und/oder Ansteuerung eines oder mehrerer Einlässe bzw. Auslässe in die bzw. aus der Prozesskammer 3, die zur Gaszufuhr bzw. zur Gasabfuhr dienen, können in der Beströmungsvorrichtung 30 unterschiedliche Strömungsverteilungen verwirklicht werden. Sind die Ein- und Auslässe zur Gaszufuhr bzw. zur Gasabfuhr, wie in Fig. 1 dargestellt, in geringem Abstand über dem Niveau des Baufelds angeordnet, kann ein im Wesentlichen horizontaler Gasfluss über das Baufeld von einer Seite zu einer anderen erzeugt werden. Die Verteilung der Gaseinlässe und Gasauslässe um das Baufeld herum beeinflusst dabei die Strömungsverteilung des Gasflusses über das Baufeld.

Fig. 2a bis 2c zeigen als Beispiele Aufsichten auf ein Baufeld zur Verdeutlichung verschiedener Alternativen, wie Gas während des Scannens im Wesentlichen horizontal über das Baufeld strömen kann.

Fig. 2a zeigt schematisch eine Strömungsverteilung, wie sie der eingangs genannten DE 10 2013 205 724 A1 zugrunde liegt. Zu ihrer Erzeugung ist auf einer Baufeldseite (in der Figur links) ein sich über die gesamte Baufeldbreite erstreckender Gaseinlass angeordnet und auf der gegenüberliegenden Baufeldseite (in der Figur rechts) ein sich ebenfalls über die gesamte Baufeldbreite erstreckender Gasauslass. Bei geeigneter Ansteuerung ergibt sich eine über das gesamte Baufeld im Wesentlichen gleichgerichtete Strömung mit parallel zueinander verlaufenden Strömungslinien, welche in der Figur 2a die im Wesentlichen parallel zueinander in die gleiche Richtung fließenden Gasteilströme symbolisieren.

Fig. 2b zeigt schematisch eine Strömungsverteilung, die sich ergibt, wenn ein Gaseinlass Gas punktuell aus einer Ecke der Prozesskammer 3 zuführt (in der Figur oben links). Die Gasteilströme dieser Fächerströmung können optional an den zwei der Ecke gegenüberliegenden Seiten (in der Figur rechts und unten) des Baufelds 8 durch je einen sich über die gesamte Baufeldbreite erstreckenden Gasauslass abgeführt werden. Die Strömungslinien bzw. Strömungsrichtungen der Gasteilströme laufen auseinander (divergieren) und bilden zueinander einen Winkel. Der maximale Winkel zwischen den Strömungslinien in der Draufsicht wird als Divergenzwinkel 6 bezeichnet. Im vorliegenden Beispiel beträgt er δ = 90°.

Fig. 2c zeigt schematisch eine Strömungsverteilung, die sich ergibt, wenn ein Gaseinlass Gas punktuell in der Mitte einer Seite (in der Figur oben links) zuführt. Die Gasteilströme dieser Fächerströmung können optional an den drei anderen Seiten (in der Figur oben, rechts und unten) durch je einen sich über die gesamte Baufeldbreite erstreckenden Gasauslass abgeführt werden. Die Strömungslinien laufen wiederum auseinander, der Divergenzwinkel beträgt δ = 180°.

Zusätzlich oder alternativ zu der Anordnung von Gaseinlässen auf der Höhe des Baufelds bzw. in einem Abstand über dem Baufeld können auch ein oder mehrere Gaseinlässe oberhalb des Baufelds angeordnet sein, um einen im Wesentlichen vertikal auf das Baufeld auftreffenden Gasstrom zu erzeugen. Dieser Gasstrom wird nach dem Auftreffen umgelenkt und fließt dann über das Baufeld zu auf dessen Seiten angeordneten Gasauslässen ab .

Fig. 2d bis 2f zeigen als Beispiele Aufsichten auf ein Baufeld zur Verdeutlichung verschiedener Alternativen, wie Gas, das während des Scannens im Wesentlichen vertikal auf das Baufeld auftrifft (beispielsweise in einem Winkel von 80° bis 90° zum Baufeld) über das Baufeld zu auf dessen Seiten angeordneten Gasauslässen strömen kann.

Fig. 2d zeigt schematisch eine Strömungsverteilung, die sich ergibt, wenn Gas von oben im Wesentlichen senkrecht zum Baufeld so zugeführt wird, dass es in einer im Wesentlichen kreisrunden Auftrefffläche (in der Figur gestrichelt dargestellt) auf das Baufeld auftrifft und dort radial nach allen Seiten zu dort angeordneten Gasauslässen abfließt. Hier sind alle Strömungsrichtungen in einer Ebene parallel zum Baufeld vertreten, der Divergenzwinkel beträgt δ = 360°.

Fig. 2e zeigt schematisch eine Strömungsverteilung, die sich ergibt, wenn Gas von oben im Wesentlichen senkrecht zum Baufeld so zugeführt wird, dass es in einer länglichen, beispielsweise ovalen oder elliptischen Auftrefffläche (in der Figur gestrichelt dargestellt) auf das Baufeld auftrifft und dort nach zwei gegenüberliegenden Seiten zu dort angeordneten Gasauslässen abgeführt wird.

Fig. 2f zeigt schematisch eine Strömungsverteilung, die sich ergibt, wenn Gas von oben, z. B. durch einen Gaseinlass in der Prozesskammerdecke, im Wesentlichen senkrecht zum Baufeld so zugeführt wird, dass eine Auftrefffläche der Gasströmung auf dem Baufeld die Form eines schmalen Rechtecks (in der Figur gestrichelt dargestellt) hat, und es dort nach zwei gegenüberliegenden Seiten zu dort angeordneten Gasauslässen abgeführt wird.

Solche Strömungsverteilungen können auch im Lauf des Verfahrens geändert werden, beispielsweise durch Umschalten von Einlässen bzw. Auslässen zwischen Gaszufuhrbetrieb, Gasabfuhrbetrieb und Ruhezustand und/oder durch Bewegen von Düsen an den Einlässen bzw. Auslässen. Dadurch lassen sich generell variable oder fixe Strömungsrichtungen verwirklichen, die aktiv oder passiv beeinflusst werden können, beispielsweise durch Ausrichtung eines Wirkbereichs einer Einblasung bzw. Absaugung und/oder Behinderung bzw. zeitweiser Unterbrechung einer Strömung durch z. B. über dem Baufeld verfahrende und/oder ruhende Elemente der Beschichtungs- und/oder Beströmungsvorrichtung oder andere Komponenten. Die vorliegende Erfindung bezieht sich auf Strömungsverteilungen wie die in Fig. 2b bis 2f gezeigten. Sie ist jedoch nicht darauf eingeschränkt, sondern kann auf alle Strömungsverteilungen angewendet werden, bei der Gas mit mehreren Strömungsrichtungen, die im Wesentlichen nicht gleichgerichtet sind, über das Baufeld strömt.

Gemäß einer Ausgestaltung der Erfindung wird dabei der Herstellungsvorgang so gesteuert, dass eine Verfestigungsrichtung, im vorliegenden Fall also die Richtung, in der der Laserstrahl über die aufgebrachte Pulverschicht verfährt, für zumindest einen Teil des Querschnitts des herzustellenden Objekts (also für ein Verfestigungssegment) in Abhängigkeit von einer Strömungsverteilung in einem Bereich oberhalb des jeweiligen Verfestigungssegments (also in einem Strömungssegment) gewählt wird.

Um die jeweils in der Prozesskammer herrschende Strömungsverteilung zu erfahren, erfolgt als erstes ein Entgegennehmen und/oder Ermitteln einer Verteilung der Strömungsrichtungen des Gases oberhalb des Baufelds, insbesondere im Wesentlichen direkt angrenzend an das Baufeld.

Entgegennehmen bedeutet dabei das Übernehmen aus einer Vorrichtung, in welcher die der Geometrie eines oder mehrerer verwendeter Einlässe, Auslässe bzw. Düsen der Beströmungsvorrichtung, dem verwendeten Druck und/oder der verwendeten Gasdurchflussmenge entsprechende Strömungsverteilung gespeichert ist und/oder berechnet wird, beispielsweise durch Simulation des Strömungsverlaufs. Die Speicherung oder Simulation kann mit mehreren Feinheitsgraden erfolgen, das bedeutet mit unterschiedlichen örtlichen Auflösungen über die zweidimensionale Erstreckung des Baufelds bzw. über den dreidimensionalen Raum oberhalb des Baufelds.

Die Simulation kann vorzugsweise basierend auf mindestens einem der folgenden Kriterien erfolgen:
- einer gegebenen Geometrie einer Gaszufuhr- und/oder Gasabfuhreinrichtung zum Zuführen bzw. Abführen von Gas in bzw. aus einer Prozesskammer der generativen Herstellvorrichtung,
- einer gegebenen Geometrie eines Innenraums der Prozesskammer,
- einer Projektion einer Geometrie einer Düse der Gaszufuhreinrichtung auf das Baufeld,
- einer Geschwindigkeit und/oder einer Dichte und/oder eines Drucks und/oder einer Temperatur des der Prozesskammer zugeführten Gases und/oder einer Veränderung der Geschwindigkeit und/oder der Dichte und/oder des Drucks und/oder der Temperatur des Gases während des Durchströmens der Prozesskammer.

Ermitteln bedeutet dabei eine messtechnische Erfassung der Strömungsverteilung mittels Sensoren wie etwa Anemometern, beispielsweise thermischen Anemometern. Der Feinheitsgrad der Messung ist dabei über die Anzahl der verwendeten Sensoren und damit über deren jeweiligen Abstand zueinander bzw. einer Dichte ihrer Verteilung über die Fläche des Baufelds bestimmt. Die Sensoren werden vorzugsweise in der Arbeitsebene oder einer Ebene, die in einer vorbestimmten Höhe parallel zur Arbeitsebene über ihr verläuft, angeordnet. Die Messung kann auch in mehreren Höhen über der Arbeitsebene erfolgen, beispielsweise in 0,5 und 10 mm Höhe.

Messung und Simulation können aber auch miteinander kombiniert werden, beispielsweise durch folgenden Verfahrensablauf:
- Detektieren einer Anzahl von Strömungsrichtungen des Gases oberhalb des Baufelds mittels einer vorzugsweise optischen Detektionseinrichtung (beispielsweise durch eine optische Erfassung der Bewegung von Rauchschwaden während des Bauprozesses),
- Abgleichen der detektierten Strömungsrichtungen mit örtlich und/oder zeitlich korrespondierenden in einem Computer simulierten Strömungsrichtungen,
- Ermitteln eines Korrekturfaktors auf Basis des Abgleichs der detektierten und der simulierten Strömungsrichtungen, und
- Durchführen einer Simulation der Verteilung der Strömungsrichtungen des Gases oberhalb des Baufelds unter Berücksichtigung des ermittelten Korrekturfaktors.

Als nächstes erfolgt das Zuweisen einer Referenzströmungsrichtung zu zumindest einem Bereich des Baufelds. Die Referenzströmungsrichtung ist eine Strömungsrichtung, die so gewählt wird, dass durch sie die Strömungsverteilung oberhalb des jeweils betrachteten Bereichs angenähert repräsentiert wird. Sie wird benötigt, um das Bewegen des Laserstrahls über das Baufeld anzusteuern, wie es weiter unten beschrieben ist.

Vorzugsweise erfolgt das Zuweisen einer Referenzströmungsrichtung zu einem Bereich in Abhängigkeit von einer entgegengenommenen und/oder ermittelten Verteilung der Strömungsrichtungen in einem Strömungssegment, das oberhalb des Bereichs liegt. Dabei ist das Strömungssegment vorzugsweise ein zweidimensionales Flächensegment mit einem vorbestimmten Abstand zu dem Baufeld und/oder ein dreidimensionales Raumsegment mit einem vorbestimmten Abstand zu dem Baufeld und einer vorbestimmten Höhe, wobei der vorbestimmte Abstand zu dem Baufeld jeweils auch Null sein kann.

Dabei wird die Referenzströmungsrichtung vorzugsweise aus der entgegengenommenen und/oder ermittelten Verteilung der Strömungsrichtungen in dem Strömungssegment mittels einer Datenverarbeitungsvorrichtung berechnet. Dabei kann die Referenzströmungsrichtung beispielsweise als arithmetisches Mittel aus den Strömungsrichtungen in dem Bereich berechnet werden oder nur als arithmetisches Mittel aus den Horizontalkomponenten zuvor entgegengenommener bzw. ermittelter Strömungsvektoren. Die Bildung eines arithmetischen Mittels erweist sich insbesondere bei einer ausreichend feinen und über das Strömungssegment respektive Baufeld hinweg gleichmäßigen Erhebung der Verteilung von Strömungsrichtungen als vorteilhaft. Die Referenzströmungsrichtung kann auch so berechnet werden, dass eine maximale Winkelabweichung der Strömungsrichtungen in dem Bereich von der Referenzströmungsrichtung in beide Richtungen gleich groß ist, also jeweils gleich dem halben Divergenzwinkel.

Vorzugsweise repräsentiert eine Referenzströmungsrichtung ausschließlich Strömungsrichtungen aus der entgegengenommenen oder ermittelten Verteilung, die in einem definierten

Winkelspektrum liegen und/oder Strömungsrichtungen, die mit einer jeweiligen Gasteilströmung korrelieren, deren Volumenstromwert oberhalb eines vordefinierten Schwellenwerts liegt.

Bei einem kleinen Divergenzwinkel der Strömungsverteilung kann der Bereich, dem eine Referenzströmungsrichtung zugeordnet wird, sich über das gesamte Baufeld oder beispielsweise über den gesamten Abschnitt des Baufelds, der einem Querschnitt des herzustellenden Objekts entspricht, erstrecken.

Bei größeren Divergenzwinkeln der Strömungsverteilung kann das Baufeld oder der Abschnitt des Baufelds, der einem Querschnitt des herzustellenden Objekts entspricht, in Teilbereiche oder Segmente zerlegt (segmentiert) werden, und jedem dieser Teilbereiche des Baufelds wird dann jeweils eine eigene Referenzströmungsrichtung zugewiesen.

Vorzugsweise erfolgt das Zerlegen des Baufelds in Teilbereiche (Segmentierung) in Abhängigkeit von einer Verteilung der Strömungsrichtungen oberhalb des Baufelds, in weiter bevorzugter Weise von einem Divergenzwinkel der Strömungsrichtungen. Dabei wird weiter bevorzugt eine Fläche eines Teilbereichs umso größer gewählt, je kleiner der Divergenzwinkel ist, und umso kleiner, je größer der Divergenzwinkel ist.

Das Zerlegen in Teilbereiche erfolgt vorzugsweise so, dass der Divergenzwinkel oberhalb des Teilbereichs einen vorbestimmten Winkel nicht überschreitet, oder anders ausgedrückt, dass eine Abweichung einer Strömungsrichtung oberhalb eines Teilbereichs von der einer mittleren Strömungsrichtung beidseitig einen vorbestimmten Winkel nicht überschreitet. Als mittlere Strömungsrichtung kann beispielsweise das arithmetische Mittel der Strömungsrichtungen in dem Bereich gewählt werden. Alternativ kann beispielsweise auch die Richtung gewählt werden, für die innerhalb des Teilbereichs eine Winkelabweichung der Strömungsrichtungen von der mittleren Strömungsrichtung in beide Richtungen gleich groß ist. Der vorbestimmte Winkel beträgt dabei mindestens 0°, vorzugsweise mindestens 1°, besonders bevorzugt mindestens 5° und/oder höchstens 60°, vorzugsweise höchstens 30°, besonders bevorzugt höchstens 20°.

Vorzugsweise sind die Teilbereiche aneinander angrenzend und/oder einander überlappend gewählt und/oder das Zerlegen in Teilbereiche erfolgt in Abhängigkeit von einer Geometrie des herzustellenden Objekts in der jeweiligen Schicht und/oder das Zerlegen in Teilbereiche in Abhängigkeit erfolgt innerhalb einer Schicht lokal selektiv, weiter bevorzugt indem eine Abweichung der Strömungsrichtungen oberhalb der Teilbereiche von einer jeweiligen mittleren Strömungsrichtung oberhalb der Teilbereiche durch unterschiedliche vorbestimmte Winkel begrenzt wird.

Das Zerlegen in Teilbereiche kann auch schichtspezifisch in Abhängigkeit von einer Geometrie eines jeweils zu verfestigenden Querschnitts des herzustellenden Objekts und/oder von einem Verhältnis von Flächeninhalten eines zu verfestigenden Bereichs und eines nicht zu verfestigenden Bereichs des Baufelds und/oder von einem Grad der Fragmentierung des zu verfestigenden Bereichs innerhalb einer jeweiligen Schicht erfolgen.

Bei einer Strömungsverteilung wie der in Fig. 2f gezeigten kann das Baufeld beispielsweise in einen linken und einen rechten Bereich unterteilt werden, in denen jeweils die Strömung im Wesentlichen gleichgerichtet ist: im linken Bereich nach links und im rechten Bereich nach rechts.

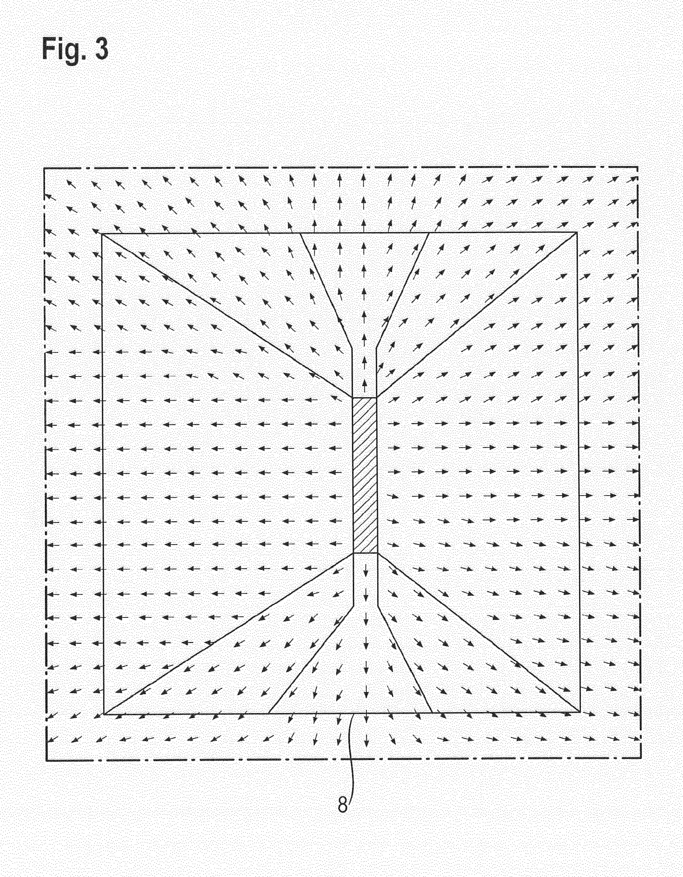

Fig. 3 zeigt eine Draufsicht auf ein Baufeld 8 bei einer Strömungsverteilung ähnlich der, wie sie in Fig. 2e gezeigt ist. Als Beispiel ist das Baufeld in Abhängigkeit von einer Verteilung der Strömungsrichtungen oberhalb des Baufelds in neun Teilbereiche unterteilt. Oberhalb des mittleren, schraffiert dargestellten Teilbereichs verläuft die Strömung im Wesentlichen vertikal, beispielsweise in einem Winkel von 80° bis 90° zum Baufeld. Das bedeutet, dass die vertikalen Richtungen (z. B. in einem Winkel zwischen 45° und 90° relativ zum Baufeld) in der Strömungsverteilung innerhalb des Strömungssegments, das auf dem schraffierten Feld gebildet wurde, die horizontalen Richtungen (z. B. in einem Winkel kleiner 45° relativ zum Baufeld) überwiegen. Ein Mengenverhältnis von Teilströmen mit überwiegend vertikalen und Teilströmen mit überwiegend horizontalen Richtungen zueinander kann dabei über ihren jeweiligen Volumenstrom ermittelt werden. Eine Verteilung von Strömungsrichtungen kann also durch die Einbeziehung von korrespondierenden Volumenstromwerten gewichtet und somit interpretiert werden. Bei einem im Wesentlichen vertikal auf das Baufeld auftreffenden Strahl ist es zudem von Bedeutung, auf welcher Höhe über dem Baufeld die Verteilung der Strömungsrichtungen ermittelt wird. Es kann der Fall eintreten, dass eine Ermittlung von Strömungsvektoren auf einer Höhe von 10cm über dem Baufeld eine Betonung vertikaler

Komponenten zeigt und auf einer Höhe von 1cm über dem Baufeld eine Betonung horizontaler Komponenten. Der Grund dafür liegt in dem Phänomen, dass im Wesentlichen vertikal auf dem Baufeld auftreffendes Gas häufig im Wesentlichen horizontal abfließt und eine Zone des Abfließens eine relativ flache Höhenerstreckung aufweist. Die Richtung des Abfließens bestimmt maßgeblich die Richtung einer Bewegung beim Verfestigen des Pulvers entstehenden Schmauchs und kann daher als wichtigeres Kriterium für ein Einstellen der Verfestigungsrichtung gelten als der im Wesentlichen vertikal verlaufende Gasstrom vor seiner Umlenkung. Dem schraffiert gekennzeichneten Bereich wird in dem hier behandelten Beispiel keine Referenzströmungsrichtung zugeordnet. Bei der Anordnung des oder der herzustellenden Objekt(e) auf dem Baufeld, d. h. in x-/y-Richtung, kann vermieden werden, dass ein Verfestigungssegment in diesen Bereich des Baufelds fällt oder sich damit überschneidet. Alternativ kann in diesem Bereich in beliebige Richtungen verfestigt werden. In den anderen acht Teilbereichen verläuft die Strömung im Wesentlichen horizontal, und die Strömungsrichtungen, welche in einer Ebene parallel zum Baufeld mit einem Abstand zum Baufeld ermittelt wurden, liegen jeweils innerhalb eines begrenzten Divergenzbereichs. Hier kann jedem der acht Teilbereiche eine Referenzströmungsrichtung zugewiesen werden, wie es weiter unten beschrieben ist.

Während oben die Zerlegung des Baufelds in Teilbereiche bauteilunabhängig beschrieben ist, kann sie auch in Abhängigkeit von der Lage der herzustellenden Objekte auf dem Baufeld bzw. in der x-/y-Ebene durchgeführt werden.

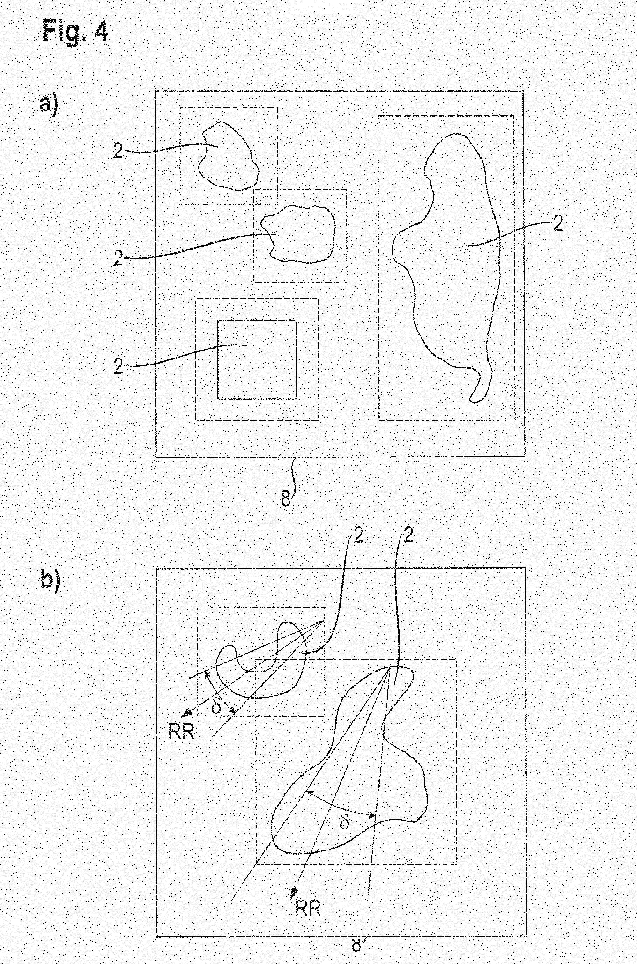

Fig. 4 zeigt eine Draufsicht auf ein Baufeld 8, in dem die Querschnitte mehrerer herzustellender Objekte 2 angeordnet sind. Die Unterteilung in Teilbereiche, die in der Figur gestrichelt dargestellt sind, geschieht so, dass jedem Objekt 2 ein Teilbereich zugeordnet ist, beispielsweise ein Rechteck oder eine an ein streifen- oder schachbrettförmiges Belichtungsmuster angepasste geometrische Figur, die es umgibt. Dabei können Grenzen zwischen Teilbereichen beispielsweise auch in Abhängigkeit von Arbeitsbereichen unterschiedlicher Verfestigungs- bzw. Laserstrahlen gezogen werden, falls es sich um eine Herstellvorrichtung mit mehreren Verfestigungsstrahlen handelt. In Fig. 4a bleibt dabei die Strömungsverteilung außer Betracht, in Fig. 4b ist sie mit einbezogen. Dort ist die mittlere Strömungsrichtung durch einen Pfeil dargestellt und der Divergenzbereich der Strömung durch je zwei im Winkel zu diesem Pfeil angeordnete Linien.

Es können auch in einer Datenbank im Voraus mehrere Segmentierungsmodelle gespeichert sein, die gestaltet und verwendet werden in Abhängigkeit von vordefinierten Einstellungen einer Beströmung der Prozesskammer z. B. von Richtung, Geschwindigkeit und/oder Wirkbereich der Beströmung. Dabei kann jedes der beströmungsabhängigen Segmentierungsmodelle mehrere Feinheitsgrade aufweisen, die abhängig von einer Qualitätsanforderung an den Bauprozess gewählt werden können. Falls eine hohe Bauteilqualität erwünscht ist, kann eine feine Segmentierung gewählt werden, was eine geringere Herstellungsgeschwindigkeit zur Folge haben kann, beispielsweise weil der Verfestigungsstrahl häufiger von einem Verfestigungssegment zum nächsten springen muss, ohne dabei zu verfestigen. Falls eine hohe Geschwindigkeit erwünscht ist, kann eine grobe Segmentierung gewählt werden, was eine geringere Homogenität des Querschnitts oder des gesamten Bauteilszur Folge haben kann. Ein Grad der Segmentierung kann auch abhängig von einem Ort am Bauteil eingestellt werden, z. B. in einem Innenbereich gröber oder an einer Kontur des herzustellenden Objekts feiner gewählt sein. Es können dafür auch Ergebnisse einer Auswertung durch einen Algorithmus berücksichtigt werden, der eine Bauteilgeometrie geeignet analysiert.

Die Segmentierung des Baufelds kann auch abhängig von der Bauteilgeometrie in einer bestimmten Schicht sein. So kann beispielsweise das Durchführen einer Segmentierung bzw. eine Auswahl eines Segmentierungsmodells aus der Datenbank abhängig von bestimmten, beispielsweise geometrischen, Kriterien individuell durchgeführt werden.

Ferner kann eine Variation von Segmentierungsmodellen bzw. konkret von Position, Flächeninhalt und/oder Gestalt eines Segments in unmittelbar aufeinander folgenden Schichten, erfolgen. Dadurch kann beispielsweise eine Überlagerung von Grenzbereichen aneinander grenzender Verfestigungssegmente in z-Richtung vermieden oder verringert werden, um besser definierte Bauteileigenschaften zu erzielen.

Vorzugsweise enthält ein zu belichtender Querschnitt möglichst wenige Teilbereiche (Verfestigungssegmente). Zu diesem Zweck kann die Positionierung eines Bauteils von der Zerlegung in Strömungssegmente abhängig gemacht werden. Die Positionierung von Bauteilen auf dem Baufeld kann auch abhängig vom Strömungsgradienten durchgeführt werden, d. h. abhängig von der Richtungsänderung der Strömung, die lokal unterschiedlich sein kann. Beispielsweise können in Bereichen starker Richtungsänderung lediglich Bauteile mit kleinem Querschnitt angeordnet werden und Bauteile mit großem Querschnitt in Bereichen geringer Richtungsänderung, oder Bereiche starker Richtungsänderung werden überhaupt von der Belegung mit Bauteilen ausgespart.

Auch bei der Bestimmung der Referenzströmungsrichtung können für eine vorbestimmte Einstellung einer Beströmung der Prozesskammer, vorzugsweise für einen vorbestimmten Verlauf eines Gasstroms und/oder einen vorbestimmten Wirkbereich der Beströmung, Daten für ein Zuweisen einer Referenzströmungsrichtung zu einem Bereich oder Teilbereich und/oder für ein Zerlegen in Teilbereiche in einer Datenbank gespeichert werden, wobei weiter bevorzugt diese Daten für ein aktuelles Zuweisen einer Referenzströmungsrichtung zu einem Bereich oder Teilbereich und/oder für ein Zerlegen eines Abschnitts des Baufelds in Teilbereiche verwendet und/oder abgeändert und verwendet werden.

Wie oben bereits mit Bezug auf die spezielle in Fig. 3 gezeigte Strömungsverteilung dargelegt, kann auch allgemein eine relativ zum Baufeld vertikale Komponente eines Vektors einer Strömungsrichtung des Gasstroms ermittelt werden und bei dem Zuweisen einer Referenzströmungsrichtung zu einem Bereich oder Teilbereich und/oder bei der Zerlegung in Teilbereiche berücksichtigt werden, wobei vorzugsweise einem Bereich oder Teilbereich keine Referenzströmungsrichtung zugewiesen wird, wenn die Strömungsrichtung(en) oberhalb des Bereichs oder Teilbereichs im Wesentlichen vertikal (beispielsweise 80-90°) zum Baufeld ist/sind.

Das Ansteuern der Belichtungsvorrichtung zum Verfestigen zumindest eines Teils des Querschnitts des herzustellenden Objekts (eines Verfestigungssegments) erfolgt dann in Abhängigkeit von einer Referenzströmungsrichtung in einem Bereich oberhalb des Verfestigungssegments (in einem Strömungssegment). Dabei wird die Abtastrichtung des Laserstrahls (die Richtung, in der der Laserstrahl das Baufeld scannt bzw. in der sich der Auftreffpunkt des Laserstrahls über das Baufeld bewegt) abhängig von der Referenzströmungsrichtung so gewählt, dass der Winkel zwischen den beiden Richtungen eine vorbestimmte Winkelbeziehung erfüllt.

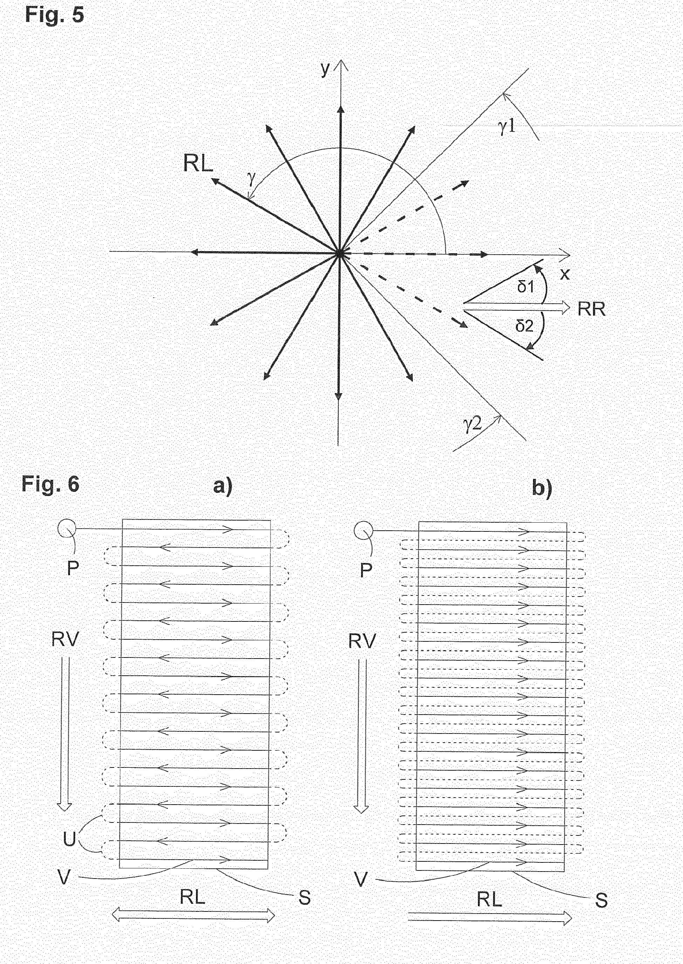

Fig. 5 zeigt eine Draufsicht auf das Baufeld mit einem Koordinatensystem. Die Referenzströmungsrichtung RR geht dabei in die positive x-Richtung. Weiter sind verschiedene Vektoren der Abtastung durch den Laserstrahl mit unterschiedlichen Abtastrichtungen RL gezeigt. Diese Abtastvektoren RL bilden jeweils mit der positiven x-Achse, also mit der Referenzströmungsrichtung RR, im mathematisch positiven Sinn einen Winkel γ, der von 0° bis 360° gehen kann (0°≤γ≤360°). Sehr gute Ergebnisse lassen sich erzielen, wenn der Abtastvektor RL und die Referenzströmungsrichtung RR in der Draufsicht auf die Arbeitsebene gesehen einen Winkel γ bilden, der zwischen 90° und 270° liegt (90°≤γ≤270°). In diesem Fall hat der Abtastvektor RL keine Komponente, die in die Referenzströmungsrichtung RR zeigt.

Aber auch bei Winkeln γ kleiner als 90° oder größer als 270°, bei denen der Abtastvektor RL eine Komponente hat, die in die Referenzströmungsrichtung RR zeigt, können noch gute Ergebnisse erzielt werden, solange die Komponente senkrecht zur Abtastrichtung RL groß genug ist, Spratzer, Rauch und von dem Laserstrahl wegzuhalten. Der bevorzugte Arbeitsbereich (Abtastvektoren durchgezogen dargestellt) liegt zwischen den beiden Grenzwinkeln γ1 und γ2 (γ1≤γ≤γ2). Abtastrichtungen RL zwischen 0° und γ1 oder zwischen γ2 und 360° (Abtastvektoren gestrichelt dargestellt) sollten vermieden werden. Die Grenzwinkel hängen von der Art des verwendeten Pulvers, der Laserleistungen, der Strömungsgeschwindigkeit des Gases und anderen Betriebsparametern der Vorrichtung ab. Im Allgemeinen lässt sich eine genügende Verbesserung der Objektqualität erzielen, wenn der Winkel γ zwischen dem Abtastvektor RL und Referenzströmungsrichtung RR in der Draufsicht auf das Baufeld zwischen 22,5° und 337,5° liegt (22,5°≤γ≤337,5°). Vorzugsweise wird ein Bereich gewählt, der zwischen 45° und 315° liegt (45°≤γ≤315°), in weiter bevorzugter Weise zwischen 60° und 300° (60°≤γ≤300°), in noch weiter bevorzugter Weise zwischen 90° und 270° (90°≤γ≤270°), In Fig. 5 ist als Beispiel ein Fall gezeigt, bei dem die Grenzwinkel γ1 und γ2 zu γ1=45° und y2=315° gewählt sind.

Bei der Festlegung der vorbestimmten Winkelbeziehung kann auch der Divergenzwinkel mit berücksichtigt werden. Dazu ist in Fig. 5 schematisch die Abweichung der Strömungsrichtungen in dem betrachteten Teilbereich von der Referenzströmungsrichtung RR durch zwei Linien gezeigt, die mit der Referenzströmungsrichtung RR einen Winkel von δ1 bzw. δ2 bildet. Der Divergenzwinkel beträgt in diesem Fall δ = δ1 + δ2. Diese Winkel sind auf die oben genannten Werte zu addieren bzw. von ihnen abzuziehen. Wenn beispielsweise der Divergenzwinkel 30° ist und δ1= δ2 = 15° gilt, liegt der bevorzugte Bereich für den Winkel γ zwischen dem Abtastvektor RL und Referenzströmungsrichtung RR in der Draufsicht auf das Baufeld zwischen 37,5° und 322,5° statt zwischen 22,5° und 337,5°. Für den Fall, in dem der Abtastvektor RL keine Komponente haben soll, die in die Referenzströmungsrichtung RR zeigt, muss der Winkel γ zwischen 105° und 255° liegen statt zwischen 90° und 270°.

Eine zweite Ausführungsform der vorliegenden Erfindung unterscheidet sich von der ersten Ausführungsform dadurch, dass ein besonderes Belichtungsmuster verwendet wird. Der dem Querschnitt des herzustellenden Objekts in einer Schicht entsprechende zu belichtende Bereich ist in längliche, parallel zu einander verlaufende Streifen S aufgeteilt, die nacheinander belichtet werden.

Fig. 6a und 6b zeigen in einer Draufsicht auf das Baufeld zwei verschiedene Varianten bei der Belichtung eines Streifens S. In beiden Fällen erfolgt die Belichtung innerhalb jedes Streifens S in zueinander parallelen Vektoren V, die im Wesentlichen senkrecht zu der Längsrichtung des Streifens liegen. Bei der Belichtung des Streifens S ergibt sich ein Fortschreiten des durch den Laser verfestigten Bereichs in einer Vorschubrichtung RV, also in einer Richtung, in der die einzelnen Vektoren V nacheinander belichtet werden.

In Fig. 6a ist eine Kurve gezeigt, in der ein Auftreffpunkt P des Laserstrahls über einen Ausschnitt des Baufelds geführt wird. Die Abtastrichtungen RL zweier benachbarter Vektoren V sind einander entgegengesetzt. Die Umkehrbereiche U (in Fig. 6a gestrichelt dargestellt) liegen dabei außerhalb des zu belichtenden Bereichs des Streifens S. Der Laserstrahl ist in diesen Bereichen ausgeschaltet oder ausgeblendet, oder die Abtastung durch den Laserstrahl erfolgt an diesen Stellen mit einer erhöhten Geschwindigkeit, die groß genug ist, dass der Energieeintrag durch den Laserstrahl nicht zum Verfestigen des pulverförmigen Aufbaumaterials ausreicht.

In Fig. 6b ist ebenfalls eine Kurve gezeigt, in der ein Auftreffpunkt P des Laserstrahls über einen Ausschnitt des Baufelds geführt wird. Dabei haben jedoch alle Vektoren V dieselbe Abtastrichtung RL. Der Laserstrahl bleibt nach der Umlenkung auf einer Seite des Streifens S ausgeschaltet oder ausgeblendet, bis er wieder die gegenüberliegende Seite des Streifens S erreicht hat und erneut umgelenkt worden ist.

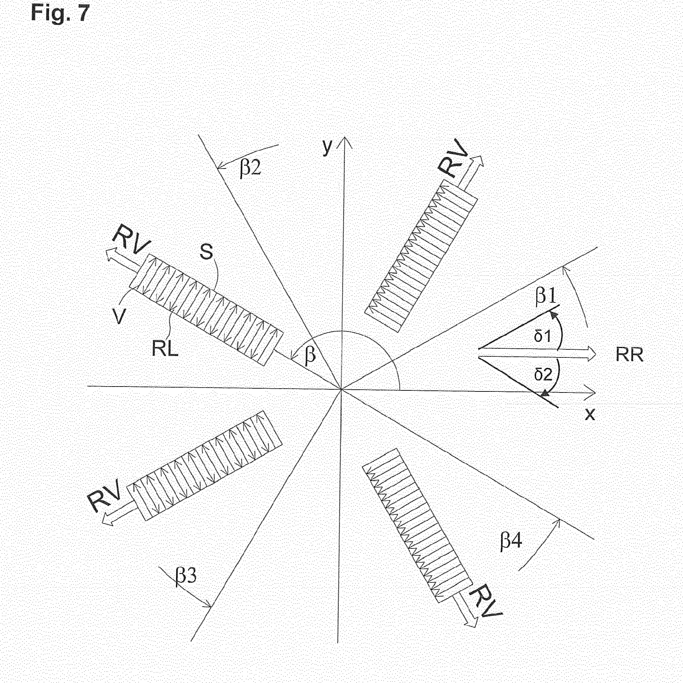

Fig. 7 ist eine schematische Draufsicht auf das Baufeld zum Verdeutlichen der Belichtung gemäß der zweiten Ausführungsform. Dabei geht die für den Bereich des Baufelds definierte Referenzströmungsrichtung RR des Gasstroms 20 in die positive x-Richtung des Koordinatensystems. Weiter sind beispielhaft für verschiedene Vorschubrichtungen RV jeweils ein einzelner Streifen S mit den darin enthaltenen Vektoren V gezeigt. Diese Vorschubrichtungen RV bilden jeweils mit der positiven x-Achse, also mit der Referenzströmungsrichtung RR, im mathematisch positiven Sinn einen Winkel β, der von 0 bis 360° gehen kann (0°≤β≤360°). In diesem Fall gibt es vier Grenzwinkel, die die Beziehung β1<β2<β3<β4 erfüllen, wobei die Bereiche zwischen 0° und β1 und zwischen β4 und 360° vermieden werden sollten.

Der optimale Arbeitsbereich liegt zwischen den beiden Grenzwinkeln β2 und β3 (β2≤β≤β3). Damit der Winkel γ zwischen den Abtastrichtungen RL der Einzelvektoren V und der Referenzströmungsrichtung RR immer die bei der ersten Ausführungsform angegebenen Bereiche eingehalten werden, wird der Winkel β so gewählt, dass er in einem Bereich zwischen 112,5° und 247,5° liegt (112,5°≤β≤247,5°), vorzugsweise zwischen 135° und 225° (135°≤β≤225°), in weiter bevorzugter Weise zwischen 150° und 210° (150°≤β≤210°). Innerhalb dieses Bereichs kann die Belichtung der einzelnen Streifen so durchgeführt werden, wie es in Fig. 6a dargestellt ist.

Ebenfalls gut geeignet sind die beiden Bereiche zwischen den Grenzwinkeln β1 und β2 (β1≤β≤β2) und zwischen den Grenzwinkeln β3 und β4 (β3≤β≤β4). Damit der Winkel γ zwischen den Abtastrichtungen RL der Einzelvektoren V und der Referenzströmungsrichtung RR immer die bei der ersten Ausführungsform angegebenen Bereiche eingehalten werden, wird die Belichtung der einzelnen Streifen in diesem Fall so durchgeführt, wie es in Fig. 6b dargestellt ist. Die für alle Vektoren V gleiche Abtastrichtung RL wird dabei so gewählt, dass sie eine Komponente in negativer X-Richtung hat, oder anders ausgedrückt, dass der Winkel γ zwischen den Abtastrichtungen RL der Einzelvektoren V und der Referenzströmungsrichtung RR zwischen 90° und 270° liegt. Diese Art der Belichtung kann natürlich auch in dem Bereich zwischen β2 und β3 angewandt werden. Da die in Fig. 6a gezeigte Art der Belichtung jedoch effizienter ist, wird diese in dem Bereich zwischen β2 und β3 bevorzugt angewandt.

Für die beiden Grenzwinkel β1 und β4 gelten dieselben Werte, wie sie in der ersten Ausführungsform für γ1 und γ2 angegeben sind, d.h. 22,5°, vorzugsweise 45° und in weiter bevorzugter Weise 60° für β1 und 337,5°, vorzugsweise 315° und in weiter bevorzugter Weise 300° für β4.

Auch hierbei kann der Divergenzwinkel mit berücksichtigt werden. Dazu ist auch in Fig. 7 wie in Fig. 5 die Abweichung der Strömungsrichtungen in dem betrachteten Teilbereich von der Referenzströmungsrichtung RR schematisch durch zwei Linien Dargestellt. Wenn beispielsweise der Divergenzwinkel 30° ist und δ1 = δ = 15° gilt, liegt der optimale Arbeitsbereich, in dem das Belichtungsmuster gemäß Fig. 6a verwendet werden kann, zwischen 127,5° und 232,5° statt zwischen 112,5° und 247,5°. Der Arbeitsbereich, in dem das Belichtungsmuster gemäß Fig. 6b verwendet werden kann, liegt zwischen 37,5° und 300° statt zwischen 22,5° und 337,5°.

Durch die oben beschriebenen Belichtungsmuster für die verschiedenen Bereiche ist sichergestellt, dass sowohl die Winkel γ zwischen den Abtastrichtungen RL der Einzelvektoren V und der Referenzströmungsrichtung RR als auch die Winkel β zwischen den Vorschubrichtungen RV und der Referenzströmungsrichtung RR in den bei der ersten Ausführungsform angegebenen Winkelbereichen liegen.

Anstelle der Aufteilung des Querschnitts in längliche, parallel zu einander verlaufende Streifen S kann auch eine Aufteilung in Quadrate, Rauten oder andere geometrische Formen erfolgen, die nacheinander belichtet werden.

Im folgenden werden zwei konkrete Ausführungsbeispiele beschrieben.

Das erste Beispiel betrifft ein Verfahren zur Zerlegung eines Baufelds in Teilbereiche, denen jeweils eine einzige Referenzströmungsrichtung zugeordnet wird. Dieses Verfahren umfasst beispielsweise folgende Schritte: Als Datenbasis wird eine Strömungsverteilung aus einer computergenerierten Simulation eines Verlaufs einer Gasströmung verwendet. Vom gesamten Raum einer Prozesskammer oberhalb des Baufelds wird hier lediglich eine Ebene parallel zum Baufeld untersucht, die einen Abstand von z. B. 1 cm zum Baufeld hat. Die Strömungsverteilung hat eine gleichmäßige Auflösung und weist quadratischen Flächen (im Folgenden Messflächen genannt) in der Ebene mit z. B. 2 cm Seitenlänge jeweils eine Strömungsrichtung in der Ebene bzw. in x-/y-Richtung zu. Damit sind einer Fläche, die einem quadratischen Baufeld mit z. B. 20 cm Seitenlänge entspricht, insgesamt 100 Strömungsrichtungsangaben in einem Messflächen-Raster zugeordnet.

In diesem Beispiel weisen das Baufeld und die Summe der Messflächen (im Folgenden Gesamtmessfläche genannt) einen identischen Flächeninhalt auf. Mit anderen Worten entspricht die Kontur des Messrasters einer Orthogonalprojektion des Baufelds auf eine Ebene 1 cm oberhalb des Baufelds. Die Strömungsrichtungen können auch extrahierte Horizontalkomponenten dreidimensionaler Strömungsvektoren sein. In dem hier beschriebenen Beispiel ist den Strömungsrichtungen, z. B. in einer verknüpften Tabelle, zusätzlich jeweils ein Volumenstromwert zugeordnet, der ebenfalls in einer Simulation ermittelt wurde. Die entsprechenden Daten können z. B. in einem Zweikanalbild bereitgestellt werden.

Zur Auswertung werden den Strömungsrichtungsinformationen anschließend Farbwerte oder Grauwerte aus einer geeignet auflösenden Farb- oder Grauwerteskala zugeordnet. Ein Winkelwert einer Strömungsrichtung relativ zur Erstreckung des Baufelds bzw. einer Seite des Baufelds, der z. B. 78,3° beträgt, wird demnach in einen individuellen Farbwert bzw. Graustufenwert konvertiert oder damit verknüpft. Jede der in diesem Fall 100 zweidimensionalen Strömungsrichtungsangaben wird in dieser Weise kodiert.

Im nächsten Schritt erfolgt dann eine Kategorisierung der Farbwerte bzw. Graustufenwerte der Messflächen nach dem Kriterium einer Referenzströmungsrichtung und eines damit verknüpften Divergenzwinkels der Strömungsrichtungen. Die Kategorisierung kann entweder für die Gesamtmessfläche durchgeführt werden, oder für einen Bereich der Gesamtmessfläche, der einem auf dem Baufeld positionierten Bauteilquerschnitt entspricht. Gemäß dem hier gewählten Verfahren werden die ermittelten Farbwerte bzw. Graustufenwerte in Farbbereiche bzw. Gruppen von Farbbereichen/Graustufenbereichen kategorisiert. Diese Kategorisierung basiert auf einem zuvor festgelegten maximalen Divergenzwinkel. Der Divergenzwinkel kann dabei zeitlich gesehen für einen Bauvorgang eines Objekts oder für eine Schicht gelten und räumlich gesehen entweder für eine Gesamtmessfläche oder selektiv für bestimmte Bereiche der Gesamtmessfläche bis hin zu einzelnen Messflächen individuell festgelegt werden. Eine Auswertung dieser Kategorisierung kann z. B. mittels eines Histogramms erfolgen.

Auf dieser Basis werden dann die Messflächen einer jeweils gleichen Kategorie einander zugeordnet oder gegebenenfalls miteinander vereinigt. Im Ergebnis wird visualisiert, welche Bereiche der Gesamtmessfläche bzw. eines repräsentierten Bauteilquerschnitts bestimmte Bedingungen erfüllen, nämlich erstens hinsichtlich einer Strömungsrichtung in einer Messfläche, zweitens hinsichtlich eines Divergenzwinkels, d. h. eines Spektrums erlaubter Abweichungen von der jeweiligen Referenzströmungsrichtung. Beispielsweise können 12 der 100 Messflächen die Bedingung erfüllen, dass die für sie ermittelten Strömungsrichtungen innerhalb eines Winkelbereichs von 45° bis 60° liegen, was einem definierten Divergenzwinkel von 15° entspricht. Zusätzlich wird aufgrund der Dynamik einer Gasströmung jeweils ein beidseitiger Toleranzbereich einer Strömungsabweichung von z. B. 7,5° addiert, sodass mit einem Gesamtwinkelbereich von 30° gerechnet wird. Die sich auf diese Art und Weise gebildeten Flächen innerhalb der Gesamtmessfläche bzw. des darin repräsentierten Bauteilquerschnitts werden hier als Strömungssegmente bezeichnet.

Optional werden die im zweiten Kanal vorliegenden Volumenstromwerte mit dieser Auswertung korreliert. Beispielsweise können die Messflächen mit einem Volumenstromwert unterhalb eines vorgegebenen Schwellenwerts aus einer Bildung eines bestimmten Strömungssegments ausgenommen und z. B. einem benachbarten Strömungssegment zugeschlagen werden. Dadurch kann gegebenenfalls eine Reduzierung der Zahl von Strömungssegmenten erreicht werden, ohne signifikante Nachteile in Kauf zu nehmen.

Im Folgenden werden auf Basis der erzeugten Strömungssegmente Verfestigungssegmente gebildet, d. h. das Baufeld oder ein Querschnitt in virtuelle Bereiche/Teilbereiche zerlegt, die eine Belichtungsstrategie determinieren. Da die Geometrie der Strömungssegmente unregelmäßig ausfallen kann, kann es unvorteilhaft sein, ihre Form unverändert auf die Verfestigungssegmente zu übertragen. Daher werden im nächsten Verfahrensschritt Konturen geglättet und/oder die einzelnen Flächen oder Flächenaggregationen derart in Polygone transformiert, dass eine spätere Belichtung im Hinblick auf einen möglichst homogenen und gut kontrollierbaren Energieeintrag vorbereitet bzw. erleichtert wird.

Den gebildeten Verfestigungssegmenten werden im Folgenden Belichtungsstreifen bzw. Belichtungsstreifenfragmente in Abhängigkeit von Winkelbereichen relativ zur jeweiligen Referenzströmung zugeordnet, wie es in der Beschreibung zu den Figuren 5 bis 7 erläutert wurde.

Das zweite Beispiel betrifft ein Belichtungsverfahren. Das im Folgenden beschriebene beispielhafte Belichtungsverfahren basiert nicht notwendigerweise auf dem zuvor beschriebenen ersten Beispiel der Bildung von Strömungs- und Verfestigungssegmenten. Als Bedingung wird zunächst eine standardmäßige Belichtung mittels aneinander angrenzender Streifen mit fester Streifenbreite vorausgesetzt. Jeder Belichtungsstreifen enthält alternierende Scanlinien (Hatches), die rechtwinklig zur Ausrichtung des Belichtungsstreifens stehen. Diese Form der Belichtung gewährleistet typischerweise eine relativ hohe Verfestigungsgeschwindigkeit bei gut kontrollierbarem Energieeintrag. Im ersten Schritt wird ein Winkel relativ zum Baufeld bzw. einer Baufeldseite vorgegeben, mit dem ein Muster von Belichtungsstreifen virtuell zum Baufeld bzw. zu einem zu belichtenden Querschnitt orientiert wird. Hierauf wird geprüft, ob und wo in den zu belichtenden Bereichen einer Schicht ein definierter Fächer von Strömungsrichtungen (die jeweilige Referenzströmungsrichtung mit dem zugeordneten Divergenzwinkel) in einer Winkelbeziehung zu der Ausrichtung der Hatches steht, die den zuvor festgelegten zulässigen Winkelbereichen entspricht.

Dort, wo die obigen Bedingungen erfüllt sind, wird eine Belichtung mit dem Streifenmuster vorgesehen, das im vorgegebenen Winkel ausgerichtet ist. Dort, wo die obigen Bedingungen nicht erfüllt sind, wird beispielsweise eine Belichtung mit einer um 90° gedrehten Ausrichtung der Belichtungsstreifen vorgesehen. So entsteht über den in einer Schicht belichteten Querschnitt hinweg eine Art Fischgrätmuster von Verfestigungsspuren. Beispielsweise können die rechtwinklig zueinander ausgerichteten Belichtungsstreifen jeweils unterschiedlichen Verfestigungs- bzw. Laserstrahlen zugeordnet werden, falls es sich um ein System mit mehreren gleichzeitig aktivierbaren Verfestigungsstrahlen handelt.

Alternativ kann ein anderer Winkel innerhalb des zuvor festgelegten Bereichs einer Rotationsfreiheit für die Ausrichtung der Belichtungsstreifen gewählt werden oder ein anderes Belichtungsmuster. Eine Verfestigung mittels Belichtungsstreifen, die in einem Winkel von 90° zueinander liegen und direkt aneinander angrenzen, bietet allerdings den Vorteil einer erheblich besseren Kontrollierbarkeit des Energieeintrags pro Flächeneinheit bei einfacher Umsetzung.

Neben den oben beschriebenen Formen der Belichtung können auch weitere Belichtungsstrategien verwendet werden, beispielsweise andere der in der eingangs genannten DE 10 2013 205 724 A1 aufgeführten. So können beispielsweise die Abtastrichtung und/oder die Vorschubrichtung der Streifen von Schicht zu Schicht um einen vorbestimmten Winkel gedreht werden. Dabei tritt die gemäß der vorliegenden Erfindung bestimmte Referenzströmungsrichtung an die Stelle der dort genannten Hauptströmungsrichtung, und das Anpassen der Scanrichtung des Laserstrahls an die Referenzströmungsrichtung erfolgt wie dort mit Bezug auf die Hauptströmungsrichtung beschrieben.

Unabhängig von der gewählten Belichtungsstrategie kann in der Praxis ein Problem in der Größe und Lage von Bauteilquerschnitten im Verhältnis zur Lage von Grenzen der gebildeten Strömungssegmente liegen. Vorzugsweise wird ein Querschnitt eines herzustellenden Objekts in einer einzigen Ausrichtung der (alternierenden) Belichtungslinien oder Vektoren belichtet, weil eine Ausrichtungsänderung aufgrund dessen, dass Belichtungsstreifen schräg zueinander liegen, das Risiko schlechterer Bauteileigenschaften durch Inhomogenität des Energieeintrags erhöht. Daher erfolgt vorzugsweise die Positionierung von Bauteilen in Abhängigkeit von der Lage von Strömungssegmenten derart, dass ein virtuelles Überschneiden der Querschnitte und der in der Software gebildeten Strömungssegmentgrenzen vermieden wird. Zusätzlich oder alternativ kann eine bestimmte Belichtungsrichtung (z. B. die Ausrichtung der Vektoren) für einen gesamten Querschnitt, übernommen werden, obwohl der Querschnitt eine oder mehrere Strömungssegmentgrenzen schneidet. Dies erfolgt jedoch sinnvollerweise nur unter bestimmten Bedingungen (z. B. Grad einer Änderung der Strömungsrichtung im benachbarten Strömungssegment oder in einem benachbarten Teilbereich des Strömungssegments; Verhältnis des Flächeninhalts des fraglichen Querschnittbereichs zum Flächeninhalt des gesamten Bauteilquerschnitts liegt unter einem definierten Schwellenwert, usw.).

Bei relativ kleinen Querschnitten ist die Wahrscheinlichkeit des Schneidens von Querschnitten und Strömungssegmentgrenzen relativ gering. Daher können einzelne Querschnitte häufig unter Berücksichtigung einer einzigen Referenzströmungsrichtung bzw. mit einer einzigen Ausrichtung der Belichtungsvektoren pro Schicht verfestigt werden. Dabei ist unter "Ausrichtung" nicht die Zielrichtung der Verfestigungsspur zu verstehen, sondern die Lage einer Verfestigungsspur relativ zur Erstreckung des Baufelds bzw. einer Schicht. Ein Umpositionieren eines Bauteils auf dem Baufeld, d. h. in der x-/y-Ebene, zum Vermeiden des Schneidens von Strömungssegmentgrenzen ist bei relativ kleinen Querschnitten häufig einfach zu bewerkstelligen.

Bei relativ großen Querschnitten ist die Wahrscheinlichkeit der Überschneidung von Querschnitten und Strömungssegmentgrenzen relativ groß, so dass einzelne Querschnitte häufig nicht unter Berücksichtigung einer einzigen Referenzströmungsrichtung bzw. mit einer einzigen Ausrichtung der Vektoren pro Schicht verfestigt werden können. Ein Umpositionieren eines Bauteils in der x-/y-Ebene zum Vermeiden des Schneidens von Strömungssegmentgrenzen ist bei relativ großen Querschnitten häufig schwierig.

Für mögliche Grenzfälle, beispielsweise wenn annähernd gleich große Teile eines Querschnitts in aneinander angrenzenden Strömungssegmenten liegen oder wenn ein Querschnitt in drei oder mehreren Strömungssegmenten liegt, sollte eine Programmierung der Steuerung differenzierte Lösungen bereitstellen.

Gemäß einer Ausgestaltung der Erfindung muss eine Abstimmung zwischen der Abtastrichtung des Laserstrahls und der Referenzströmungsrichtung nicht zwingend über das gesamte Verfestigungssegment durchgeführt werden, sondern kann auch nur an den Stellen erfolgen, an denen die Qualitätsanforderungen besonders hoch sind. In anderen Bereichen, z. B. dort, wo eine hohe Aufbaugeschwindigkeit wichtiger als spezifische mechanische Eigenschaften eines Bauteils ist, kann auf diese Abstimmung verzichtet werden.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials angewendet werden.

Der Belichter kann beispielsweise einen oder mehrere Gas- oder Festkörperlaser oder jede andere Art von Laser wie z. B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Die Verfestigungsrichtung wäre in diesem Beispiel die Richtung, in der der Kleberauftrag auf die Pulveroberfläche erfolgt. Allgemein bezieht sich die Erfindung auf das generative Herstellen eines Objekts mittels schichtweisen Auftragens und selektiven Verfestigens eines Aufbaumaterials unabhängig von der Art und Weise, in der das Aufbaumaterial verfestigt wird.

Als Aufbaumaterial können verschiedene Arten von Pulver verwendet werden, insbesondere Metallpulver, Kunststoffpulver, Keramikpulver, Sand, gefüllte oder gemischte Pulver. Dabei kann Pulver auch in Form einer Suspension bereitgestellt werden. Anstelle von Pulver können auch andere geeignete Materialien als Aufbaumaterial verwendet werden.

Als Gas für den Gasstrom wird vorzugsweise ein Inertgas, z. B. Argon oder Stickstoff verwendet. Die Erfindung kann jedoch auch angewendet werden, wenn anstelle eines Inertgases ein Prozessgas verwendet wird, das mit den am Prozess beteiligten Materialien reagiert, z. B. zu einer reaktiven Abscheidung des Pulvermaterials.

## Patentansprüche

1. Steuerverfahren zum Ansteuern wenigstens einer Verfestigungsvorrichtung (20) einer generativen Herstellvorrichtung (1) zur Herstellung eines dreidimensionalen Objekts (2) mittels eines generativen Schichtbauverfahrens, bei dem wenigstens ein Objekt schichtweise durch wiederholtes Aufbringen einer Schicht eines Aufbaumaterials (15), vorzugsweise eines Pulvers, auf ein Baufeld (8) und durch selektives Verfestigen der aufgebrachten Schicht an Stellen, die einem Querschnitt des herzustellenden Objekts (2) entsprechen, hergestellt wird, und bei dem ein Gas mit mehreren Strömungsrichtungen, die im Wesentlichen nicht gleichgerichtet sind, über das Baufeld (8) strömt, wobei das Verfahren für zumindest eine zu verfestigende Schicht die Schritte enthält:
Entgegennehmen und/oder Ermitteln einer Verteilung der Strömungsrichtungen des Gases oberhalb des Baufelds (8),
Zuweisen einer Referenzströmungsrichtung (RR) zu einem Bereich des Baufelds (8) in Abhängigkeit von der Verteilung der Strömungsrichtungen oberhalb des Bereichs,
Ansteuern der Verfestigungsvorrichtung (20) zum Verfestigen zumindest eines Teils des Querschnitts des herzustellenden Objekts (2) in Abhängigkeit von einer Referenzströmungsrichtung (RR) oberhalb des Bereichs des Baufelds (8), in dem der jeweilige Teil des Querschnitts positioniert ist.

2. Steuerverfahren gemäß Anspruch 1, das ferner die Schritte enthält:
Zerlegen zumindest eines Abschnitts des Baufelds (8) in mehrere Teilbereiche,
für mehr als einen Teilbereich des Baufelds das Zuweisen je einer Referenzströmungsrichtung (RR) zu dem Teilbereich,
wobei vorzugsweise die Teilbereiche aneinander angrenzend und/oder einander überlappend gewählt sind und/oder das Zerlegen in Teilbereiche in Abhängigkeit von einer Geometrie des herzustellenden Objekts (2) in der jeweiligen Schicht erfolgt und/oder das Zerlegen in Teilbereiche in Abhängigkeit von einer Verteilung der Strömungsrichtungen oberhalb des Baufelds (8) erfolgt.

3. Steuerverfahren gemäß Anspruch 2, bei dem weiterhin die Verfestigungsvorrichtung (20) zum Verfestigen zumindest eines Teils des Querschnitts des herzustellenden Objekts (2), der sich über mehr als einen der Teilbereiche erstreckt, in Abhängigkeit von der jeweiligen Referenzströmungsrichtung (RR) oberhalb des jeweiligen Teilbereichs angesteuert wird.

4. Steuerverfahren gemäß Anspruch 2 oder 3, bei dem
das Zerlegen in Teilbereiche in Abhängigkeit von einem Divergenzwinkel (δ) der Strömungsrichtungen erfolgt,
wobei vorzugsweise eine Fläche eines Teilbereichs umso größer gewählt wird, je kleiner der Divergenzwinkel (δ) ist und umso kleiner, je größer der Divergenzwinkel (δ) ist.

5. Steuerverfahren gemäß einem der Ansprüche 2 bis 4, bei dem
die Referenzströmungsrichtung (RR) eine mittlere Strömungsrichtung einer Anzahl von Strömungsrichtungen ist und
das Zerlegen in Teilbereiche so erfolgt, dass eine Abweichung einer Strömungsrichtung oberhalb eines Teilbereichs von der Referenzströmungsrichtung (RR) oberhalb des Teilbereichs einen vorbestimmten Winkel nicht überschreitet.

6. Steuerverfahren gemäß Anspruch 5, bei dem das Zerlegen in Teilbereiche innerhalb einer Schicht lokal selektiv erfolgt, vorzugsweise indem eine Abweichung der Strömungsrichtungen oberhalb der Teilbereiche von der jeweiligen Referenzströmungsrichtung (RR) oberhalb der Teilbereiche durch unterschiedliche vorbestimmte Winkel begrenzt wird.

7. Steuerverfahren gemäß einem der Ansprüche 5 oder 6, bei dem der vorbestimmte Winkel mindestens 0°, vorzugsweise mindestens 1°, besonders bevorzugt mindestens 5° und/oder höchstens 60°, vorzugsweise höchstens 30°, besonders bevorzugt höchstens 20° beträgt.

8. Steuerverfahren gemäß einem der Ansprüche 2 bis 7, bei dem das Zerlegen in Teilbereiche schichtspezifisch in Abhängigkeit von einer Geometrie eines jeweils zu verfestigenden Querschnitts des herzustellenden Objekts (2) und/oder von einem Verhältnis von Flächeninhalten eines zu verfestigenden Bereichs und eines nicht zu verfestigenden Bereichs des Baufelds (8) und/oder von einem Grad der Fragmentierung des zu verfestigenden Bereichs innerhalb einer jeweiligen Schicht erfolgt.

9. Steuerverfahren gemäß einem der Ansprüche 1 bis 8, bei dem
das Zuweisen einer Referenzströmungsrichtung zu einem Bereich oder Teilbereich in Abhängigkeit von einer Verteilung der Strömungsrichtungen in einem Strömungssegment erfolgt, das oberhalb des Bereichs oder Teilbereichs liegt,
wobei vorzugsweise das Strömungssegment ein zweidimensionales Flächensegment mit einem vorbestimmten Abstand zu dem Baufeld (8) und/oder ein dreidimensionales Raumsegment mit einem vorbestimmten Abstand zu dem Baufeld und einer vorbestimmten Höhe ist.

10. Steuerverfahren gemäß einem der Ansprüche 1 bis 9, bei dem
eine Referenzströmungsrichtung (RR) vorzugsweise ausschließlich Strömungsrichtungen aus der entgegengenommenen oder ermittelten Verteilung repräsentiert, die in einem definierten Winkelspektrum liegen und/oder vorzugsweise ausschließlich Strömungsrichtungen repräsentiert, die mit einer jeweiligen Gasteilströmung korrelieren, deren Volumenstromwert oberhalb eines vordefinierten Schwellenwerts liegt.

11. Steuerverfahren gemäß einem der Ansprüche 1 bis 10, bei dem
der Schritt des Ansteuerns ein Festlegen einer Verfestigungsrichtung (RL) für den Bereich und/oder zumindest diejenigen Teilbereiche des Baufelds (8) umfasst, in denen der Querschnitt des herzustellenden Objekts (2) positioniert ist,
wobei vorzugsweise ein Winkel (γ) zwischen einer Verfestigungsrichtung und einer Referenzströmungsrichtung (RR) mindestens 22,5°, vorzugsweise mindestens 45°, weiter bevorzugt mindestens 60°, noch weiter bevorzugt mindestens 90° und/oder höchstens 337,5°, vorzugsweise höchstens 315°, weiter bevorzugt höchstens 300°, noch weiter bevorzugt höchstens 270° beträgt.

12. Herstellungsverfahren zum generativen Herstellen eines dreidimensionalen Objekts (2) durch schichtweises Aufbringen und selektives Verfestigen eines Aufbaumaterials (15), vorzugsweise eines Pulvers, mit den Schritten:
Aufbringen einer Schicht des Aufbaumaterials auf ein Baufeld (8),
selektives Verfestigen der aufgebrachten Schicht des Aufbaumaterials an Stellen, die einem Querschnitt des herzustellenden Objekts entsprechen, mittels einer Verfestigungsvorrichtung (20), und
Wiederholen der Schritte des Aufbringens und des Verfestigens, bis das dreidimensionale Objekt (2) fertiggestellt ist,
wobei ein Gas mit mehreren Strömungsrichtungen, die im Wesentlichen nicht gleichgerichtet sind, über das Baufeld fließt und
zum Durchführen des Herstellungsverfahren ein Steuerverfahren gemäß einem der Ansprüche 1 bis 11 verwendet wird, wobei vorzugsweise das Steuerverfahren gemäß einem der Ansprüche 1 bis 11 lediglich vor einem Beginn des selektiven Verfestigens oder mehrmals während des generativen Herstellens des dreidimensionalen Objekts (2) durchgeführt wird und/oder in Abhängigkeit von einem Einstellen und/oder Ändern der Strömungsrichtungen des Gases durchgeführt wird.

13. Computerprogramm, das in eine programmierbare Steuereinheit (29) ladbar ist, mit Programmcodemitteln, um alle Schritte eines Steuerverfahrens gemäß einem der Ansprüche 1 bis 11 und/oder eines Herstellungsverfahrens gemäß Anspruch 12 auszuführen, wenn das Computerprogramm auf der Steuereinheit einer Herstellvorrichtung (1) zum generativen Herstellen eines dreidimensionalen Objekts (2) durch schichtweises Aufbringen und selektives Verfestigen eines Aufbaumaterials (15) ausgeführt wird.

14. Steuerungseinrichtung (29) für eine Herstellvorrichtung (1) zum generativen Herstellen eines dreidimensionalen Objekts (2) durch schichtweises Aufbringen und selektives Verfestigen eines Aufbaumaterials (15) in einem Baufeld, wobei die Herstellvorrichtung enthält:
eine Verfestigungsvorrichtung (20) zum selektiven Verfestigen einer auf ein Baufeld (8) aufgebrachten Schicht des Aufbaumaterials an Stellen, die einem Querschnitt des herzustellenden Objekts entsprechen, und
eine Beströmungsvorrichtung (30) zum Erzeugen eines Gasflusses mit mehreren Strömungsrichtungen, die im Wesentlichen nicht gleichgerichtet sind, über das Baufeld,
wobei die Steuerungseinrichtung ausgebildet ist, die Herstellvorrichtung so zu steuern, dass sie ein Steuerverfahren gemäß einem der Ansprüche 1 bis 11 durchführt.

15. Herstellvorrichtung (1) zum generativen Herstellen eines dreidimensionalen Objekts (2) durch schichtweises Aufbringen und selektives Verfestigen eines Aufbaumaterials (15), enthaltend:
eine Verfestigungsvorrichtung (20) zum selektiven Verfestigen einer auf ein Baufeld (8) aufgebrachten Schicht des Aufbaumaterials an Stellen, die einem Querschnitt des herzustellenden Objekts entsprechen,
eine Beströmungsvorrichtung (30) zum Erzeugen eines Gasflusses mit mehreren Strömungsrichtungen, die im Wesentlichen nicht gleichgerichtet sind, über das Baufeld,
wobei die Herstellvorrichtung ausgebildet und/oder gesteuert ist, die Schritte des Aufbringens und des selektiven Verfestigens zu wiederholen, bis das Objekt fertiggestellt ist,
wobei die Herstellvorrichtung eine Steuerungseinrichtung (29) gemäß Anspruch 14 umfasst.

## Claims

1. Control method for controlling at least one solidification device (20) of an additive manufacturing device (1) for manufacturing a three-dimensional object (2) by means of an additive layer build method in which at least one object is manufactured by repeated application of a layer of a building material (15), preferably a powder, to a build area (8) and by selective solidification of the applied layer at positions corresponding to a cross-section of the object (2) to be manufactured, wherein a gas having a plurality of flow directions which essentially are not aligned in the same direction flows across the build area (8), wherein the method comprises for at least one layer to be solidified the steps:
receiving and/or determining a distribution of the flow directions of the gas above the build area (8),
assigning a reference flow direction (RR) to an area of the build area (8) in dependence on the distribution of the flow directions above the area,
controlling the solidification device (20) to solidify at least a part of the cross-section of the object (2) to be produced in dependence on a reference flow direction (RR) above the area of the build area (8) in which the respective part of the cross-section is positioned.

2. Control method according to claim 1, further comprising the steps:
dividing at least one sub-area of the build area (8) into several sub-areas,
for more than one section of the build area, assigning a reference flow direction (RR) to the sub-area,
wherein preferably the sub-areas are selected adjacent to one another and/or overlapping one another and/or the division into sub-areas is performed in dependence on a geometry of the object (2) to be manufactured in the respective layer and/or the division into sub-areas is performed in dependence on a distribution of the flow directions above the build area.

3. Control method according to claim 2, in which further the solidification device (20) for solidifying at least a part of the cross-section of the object (2) to be manufactured, which extends across more than one of the sub-areas, is controlled in dependence on the respective reference flow direction (RR) above the respective sub-area.

4. Control method according to claim 2 or 3, in which
the division into sub-areas is performed in dependence on a divergence angle (δ) of the flow directions,
wherein preferably an area of a sub-area is selected the larger the smaller the divergence angle (δ) is and the smaller the larger the divergence angle (δ) is.

5. Control method according to one of claims 2 to 4, in which
the reference flow direction (RR) is an average flow direction of a number of flow directions, and
the division into sub-areas is performed in such a way that a deviation of a flow direction above a sub-area from the reference flow direction (RR) above the sub-area does not exceed a predetermined angle.

6. Control method according to claim 5, in which the division into sub-areas within a layer is performed locally selectively, preferably by limiting a deviation of the flow directions above the sub-areas from the respective reference flow direction (RR) above the sub-areas by different predetermined angles.

7. Control method according to one of claims 5 or 6, in which the predetermined angle is at least 0°, preferably at least 1°, particularly preferably at least 5° and/or at most 60°, preferably at most 30°, particularly preferably at most 20°.

8. Control method according to one of claims 2 to 7, in which the division into sub-areas is performed layer-specifically in dependence on a geometry of a respective cross-section be solidified of the object (2) to be manufactured and/or on a ratio of area contents of an area to be solidified and of an area of the build area (8) which is not to be solidified and/or on a degree of fragmentation of the area to be solidified within a respective layer.

9. Control method according to one of the claims 1 to 8, in which
assigning a reference flow direction to an area or sub-area is performed in dependence on a distribution of the flow directions in a flow segment above the area or sub-area,
wherein preferably the flow segment is a two-dimensional area segment with a predetermined distance to the build area (8) and/or a three-dimensional space segment with a predetermined distance to the build area and a predetermined height.

10. Control method according to one of the claims 1 to 9, in which
a reference flow direction (RR) preferably exclusively represents flow directions from the received or determined distribution which lie in a defined angular spectrum and/or preferably exclusively represents flow directions which correlate with a respective partial gas flow, the volume flow value of which lies above a predefined threshold value.

11. Control method according to one of the claims 1 to 10, in which
the step of controlling comprises defining a solidification direction (RL) for the areal and/or at least those sub-areas of the build area (8) in which the cross-section of the object (2) to be manufactured is positioned,
wherein preferably an angle (γ) between a solidification direction and a reference flow direction (RR) is at least 22.5°, preferably at least 45°, more preferably at least 60°, even more preferably at least 90° and/or at most 337.5°, preferably at most 315°, more preferably at most 300°, even more preferably at most 270°.

12. Manufacturing method for the additive manufacturing of a three-dimensional object (2) by layerwise application and selective solidification of a building material (15), preferably a powder, comprising the steps:
applying a layer of the building material to a build area (8),
selectively solidifying the applied layer of the building material at locations corresponding to a cross-section of the object to be manufactured by means of a solidifying device (20), and
repeating the steps of applying and solidifying until the three-dimensional object (2) is finished,
wherein a gas having a plurality of flow directions which essentially are not aligned in the same direction flows across the build area, and
a control method according to one of claims 1 to 11 is used to perform the manufacturing method, preferably wherein the control method according to one of claims 1 to 11 is performed only before a start of the selective solidification or several times during the additive manufacturing of the three-dimensional object (2) and/or is performed depending on an adjustment and/or a change of the flow directions of the gas.

13. Computer program loadable into a programmable control unit (29) and comprising program code means for executing all the steps of a control method according to one of claims 1 to 11 and/or a manufacturing method according to claim 12 when the computer program is executed on the control unit of a manufacturing device (1) for the additive manufacturing of a three-dimensional object (2) by layerwise application and selective solidification of a building material (15).

14. Control device (29) for a manufacturing device (1) for the additive manufacturing of a three-dimensional object (2) by layerwise application and selective solidification of a building material (15) in a build area, wherein the manufacturing device comprises:
a solidification device (20) for selectively solidifying a layer of said building material applied to a build area (8) at locations corresponding to a cross-section of the object to be manufactured, and
a flow device (30) for generating a gas flow having a plurality of flow directions which essentially are not aligned in the same direction across the build area,
wherein the control device is adapted to control the manufacturing device in such a way that it performs a control method according to one of claims 1 to 11.

15. Manufacturing device (1) for the additive manufacturing of a three-dimensional object (2) by layerwise application and selective solidification of a building material (15), comprising:
a solidification device (20) for selectively solidifying a layer of said building material applied to a build area (8) at locations corresponding to a cross-section of the object to be fabricated,
a flow device (30) for generating a gas flow having a plurality of flow directions which essentially are not aligned in the same direction across the build area,
wherein the manufacturing device is adapted and/or controlled to repeat the steps of applying and selectively solidifying until the object is completed,
wherein the manufacturing device comprises a control device (29) according to claim 14.

## Revendications

1. Procédé de commande pour commander au moins un dispositif de solidification (20) d'un dispositif de fabrication additive (1) pour fabriquer un objet tridimensionnel (2) au moyen d'un procédé de construction additive par couches dans lequel au moins un objet est fabriqué par application répétée d'une couche d'un matériau de construction (15), de préférence d'une poudre, sur une région de construction (8) et par solidification sélective de la couche appliquée à des positions correspondant à une section transversale de l'objet (2) à fabriquer, dans lequel un gaz ayant plusieurs directions d'écoulement qui ne sont essentiellement pas alignées dans la même direction s'écoule à travers la région de construction (8), dans lequel le procédé comprend, pour au moins une couche à solidifier, les étapes :
recevoir et/ou déterminer une distribution des directions d'écoulement du gaz au-dessus de la région de construction (8),
attribuer une direction d'écoulement de référence (RR) à une zone de la région de construction (8) en fonction de la distribution des directions d'écoulement au-dessus de la zone,
commander le dispositif de solidification (20) pour solidifier au moins une partie de la section transversale de l'objet (2) à produire en fonction d'une direction d'écoulement de référence (RR) au-dessus de la zone de la région de construction (8) dans laquelle la partie respective de la section transversale est positionnée.

2. Procédé de commande selon la revendication 1, comprenant en outre les étapes:
diviser au moins une partie de la région de construction (8) en plusieurs sous-zones,
pour plus d'une sous-zone de la région de construction, affecter une direction d'écoulement de référence (RR) à la sous-zone,
dans lequel, de préférence, les sous-zones sont choisies adjacentes les unes aux autres et/ou se chevauchent les unes les autres et/ou la division en sous-zones est effectuée en fonction d'une géométrie de l'objet (2) à fabriquer dans la couche respective et/ou la division en sous-zones est effectuée en fonction d'une distribution des directions d'écoulement au-dessus de la région de construction.

3. Procédé de commande selon la revendication 2, dans lequel en outre le dispositif de solidification (20) pour solidifier au moins une partie de la section transversale de l'objet (2) à fabriquer, qui s'étend sur plus d'une des sous-zones, est commandé en fonction de la direction d'écoulement de référence respective (RR) au-dessus de la sous-zone respective.

4. Procédé de contrôle selon la revendication 2 ou 3, dans lequel
la division en sous-zones est effectuée en fonction d'un angle de divergence (δ) des directions d'écoulement,
dans lequel, de préférence, une surface d'une sous-zone est choisie d'autant plus grande que l'angle de divergence (δ) est plus petit et d'autant plus petite que l'angle de divergence (δ) est plus grand.

5. Procédé de commande selon l'une des revendications 2 à 4, dans lequel.
la direction d'écoulement de référence (RR) est une direction d'écoulement moyenne d'un certain nombre de directions d'écoulement, et
la division en sous-zones est effectuée de manière à ce qu'un écart d'une direction d'écoulement au-dessus d'une sous-zone par rapport à la direction d'écoulement de référence (RR) au-dessus de la sous-zone ne dépasse pas un angle prédéterminé.

6. Procédé de commande selon la revendication 5, dans lequel la division en sous-zones à l'intérieur d'une couche est effectuée localement de manière sélective, de préférence en limitant un écart des directions d'écoulement au-dessus des sous-zones par rapport à la direction d'écoulement de référence (RR) respective au-dessus des sous-zones par différents angles prédéterminés.

7. Procédé de commande selon l'une des revendications 5 ou 6, dans lequel l'angle prédéterminé est d'au moins 0°, de préférence d'au moins 1°, de manière particulièrement préférée d'au moins 5° et/ou d'au plus 60°, de préférence d'au plus 30°, de manière particulièrement préférée d'au plus 20°.

8. Procédé de commande selon l'une des revendications 2 à 7, dans lequel la division en sous-zones est effectuée spécifiquement par couche en fonction d'une géométrie d'une section transversale respective à solidifier de l'objet (2) à fabriquer et/ou d'un rapport des contenus de surface d'une zone à solidifier et d'une zone de la région de construction (8) qui n'est pas à solidifier et/ou d'un degré de fragmentation de la zone à solidifier dans une couche respective.

9. Procédé de commande selon l'une des revendications 1 à 8, dans lequel
l'attribution d'une direction d'écoulement de référence à une zone ou une sous-zone est effectuée en fonction d'une distribution des directions d'écoulement dans un segment d'écoulement au-dessus de la zone ou de la sous-zone,
dans lequel, de préférence, le segment d'écoulement est un segment de surface bidimensionnel ayant une distance prédéterminée à la région de construction (8) et/ou un segment d'espace tridimensionnel ayant une distance prédéterminée à la région de construction et une hauteur prédéterminée.

10. Procédé de contrôle selon l'une des revendications 1 à 9, dans lequel
une direction d'écoulement de référence (RR) représente de préférence exclusivement des directions d'écoulement de la distribution reçue ou déterminée qui sont comprises dans un intervalle angulaire définie, et/ou elle représente de préférence exclusivement des directions d'écoulement qui sont en corrélation avec un écoulement partiel de gaz respectif dont la valeur de débit volumique est supérieure à une valeur seuil prédéfinie.

11. Procédé de contrôle selon l'une des revendications 1 à 10, dans lequel
l'étape de commande comprend la définition d'une direction de solidification (RL) pour la zone et/ou au moins les sous-zones de la région de construction (8) dans lesquelles la section transversale de l'objet (2) à fabriquer est positionnée,
dans lequel, de préférence, un angle (y) entre une direction de solidification et une direction d'écoulement de référence (RR) est d'au moins 22,5°, de préférence d'au moins 45°, plus préférablement d'au moins 60°, encore plus préférablement d'au moins 90° et/ou d'au plus 337,5°, de préférence d'au plus 315°, plus préférablement d'au plus 300°, encore plus préférablement d'au plus 270°.

12. Procédé de fabrication pour la fabrication additive d'un objet tridimensionnel (2) par application par couches et solidification sélective d'un matériau de construction (15), de préférence d'une poudre, comprenant les étapes suivantes :
appliquer une couche du matériau de construction sur une région de construction (8),
solidifier sélectivement la couche appliquée du matériau de construction à des emplacements correspondant à une section transversale de l'objet à fabriquer au moyen d'un dispositif de solidification (20), et
répéter les étapes d'application et de solidification jusqu'à ce que l'objet tridimensionnel (2) soit terminé,
dans lequel un gaz ayant plusieurs directions d'écoulement qui ne sont essentiellement pas alignées dans la même direction s'écoule à travers la région de construction, et
un procédé de commande selon l'une des revendications 1 à 11 est utilisé pour effectuer le procédé de fabrication, de préférence dans lequel le procédé de commande selon l'une des revendications 1 à 11 est effectué seulement avant un début de la solidification sélective ou plusieurs fois pendant la fabrication additive de l'objet tridimensionnel (2) et/ou est effectué en fonction d'un ajustement et/ou d'un changement des directions d'écoulement du gaz.

13. Programme informatique pouvant être chargé dans une unité de commande programmable (29) et comprenant des moyens de code de programme pour exécuter toutes les étapes d'un procédé de commande selon l'une des revendications 1 à 11 et/ou d'un procédé de fabrication selon la revendication 12 lorsque le programme informatique est exécuté sur l'unité de commande d'un dispositif de fabrication (1) pour la fabrication additive d'un objet tridimensionnel (2) par application par couches et solidification sélective d'un matériau de construction (15).

14. Dispositif de commande (29) pour un dispositif de fabrication (1) pour la fabrication additive d'un objet tridimensionnel (2) par application par couches et solidification sélective d'un matériau de construction (15) dans une région de construction, dans lequel le dispositif de fabrication comprend :
un dispositif de solidification (20) pour solidifier sélectivement une couche dudit matériau de construction appliqué sur une région de construction (8) à des emplacements correspondant à une section transversale de l'objet à fabriquer, et
un dispositif d'écoulement (30) pour générer un écoulement de gaz ayant plusieurs directions d'écoulement qui ne sont essentiellement pas alignées dans la même direction à travers la région de construction,
dans lequel le dispositif de commande est adapté pour commander le dispositif de fabrication de telle manière qu'il effectue un procédé de commande selon l'une des revendications 1 à 11.

15. Dispositif de fabrication (1) pour la fabrication additive d'un objet tridimensionnel (2) par application par couches et solidification sélective d'un matériau de construction (15), comprenant :
un dispositif de solidification (20) pour solidifier sélectivement une couche dudit matériau de construction appliquée sur une région de construction (8) à des emplacements correspondant à une section transversale de l'objet à fabriquer,
un dispositif d'écoulement (30) pour générer un écoulement de gaz ayant plusieurs directions d'écoulement qui ne sont essentiellement pas alignées dans la même direction à travers la région de construction,
dans lequel le dispositif de fabrication est adapté et/ou commandé pour répéter les étapes d'application et de solidification sélective jusqu'à ce que l'objet soit complété,
dans lequel le dispositif de fabrication comprend un dispositif de commande (29) selon la revendication 14.
